(19) Europäisches Patentamt / European Patent Office / Office européen des brevets

(11) EP 3 785 547 A1

(12) EUROPEAN PATENT APPLICATION
published in accordance with Art. 153(4) EPC

(43) Date of publication:
03.03.2021 Bulletin 2021/09

(51) Int Cl.:
A23L 7/126 (2016.01)

(21) Application number: 19855603.7

(86) International application number:
PCT/JP2019/031591

(22) Date of filing: 09.08.2019

(87) International publication number:
WO 2020/045052 (05.03.2020 Gazette 2020/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.08.2018 JP 2018159699

(71) Applicant: Mizkan Holdings Co., Ltd.
Handa-shi, Aichi 475-8585 (JP)

(72) Inventors:
• KOMATA, Michi
  Handa-shi, Aichi 475-8585 (JP)
• NISHIOKA, Daisuke
  Handa-shi, Aichi 475-8585 (JP)
• GOTO, Seiya
  Handa-shi, Aichi 475-8585 (JP)

(74) Representative: Mewburn Ellis LLP
Aurora Building
Counterslip
Bristol BS1 6BX (GB)

(54) SOLID FOOD PRODUCT COMPOSITION CONTAINING INSOLUBLE DIETARY FIBER, AND METHOD OF MANUFACTURING SAME

(57) To provide a solid food composition such as a food bar containing insoluble dietary fibers, which prevents powders and/or ingredients from scattering when folded into bite-size pieces or chewed at eating.

A solid food product composition comprising insoluble dietary fibers, satisfying the following (1) to (7):
(1) the composition comprises edible part and/or non-edible part of one or more foodstuffs containing insoluble dietary fibers, wherein a content of the foodstuff is 5% by mass or more and 95% by mass or less in terms of total dry mass;
(2) a content of insoluble dietary fibers is 1% by mass or more;
(3) a sugar content is 10% by mass or more and 75% by mass or less;
(4) a moisture content is 20% by mass or less;
(5) 50% cumulative particle diameter after ultrasonication is more than 15 $\mu$m and 500 $\mu$m or less;
(6) 90% cumulative particle diameter after ultrasonication is 50 $\mu$m or more and 1,000 $\mu$m or less;
(7) a minimum particle diameter after ultrasonication is 4 $\mu$m or less.

EP 3 785 547 A1

**Description**

TECHNICAL FIELD

The present invention relates to a solid food composition containing an insoluble dietary fibers and a method for manufacturing the same.

BACKGROUND ART

Conventionally, food bars are ingested as dietary substitutes or for inter-meals because they have high nutritional value and they can be eaten conveniently. If such a food bar contains insoluble dietary fibers, which is considered to have an effect such as, for example, an activation of peristaltic movement of an intestine and prevention from obesity due to a feeling of satiety, it becomes possible to easily ingest insoluble dietary fiber, which is considered to be useful. As food bars containing insoluble dietary fiber such as cereal flour, cookies using whole fat soybean flour having a specified particle diameter (Patent Literature 1), a ready-to-eat food bar composed of heated cereal-based aggregated particles and, if necessary, milk solids (Patent Literature 2), a cereal flour which reduces cracking and chipping during production and distribution, a confectionery containing cellulose (Patent Literature 3), and insoluble dietary fibers derived from wheat bran (Patent Literature 4) have been reported.

PRIOR ART LITERATURES

PATENT LITERATURES

[Patent Literature 1] JP 2016-067212-A
[Patent Literature 2] JP 2001-352927-A
[Patent Literature 3] JP 2014-087313-A
[Patent Literature 4] JP 2014-140364-A

SUMMARY OF THE INVENTION

PROBLEM

However, in the food bar recited in Patent Literatures 1 to 4, when the food bar is folded into bite-size pieces before eating or is divided by chewing at eating, there is a problem that the powders and the ingredients scatter and the periphery is messed. In particular, nowadays, precision equipment such as a personal computer is often used, and when a conventional food bar is eaten during their use, not only is it messed with powders or ingredients but also can cause the precision equipment down, so that a food such as powders or ingredients scattered tends not to be preferred. Even if the dough is simply hardened, it is not possible to prevent the powders and ingredients from scattering at eating, and it is further hard to chew, and the flavor is also hard to feel, with poor palatability.
If the dough is soft, it is a problem not to prevent the ingredients from scattering, especially among the powders and ingredients during eating. In addition, even when it is folded into bite-size pieces or chewed at eating, a food bar in which the powders and the ingredients do not scatter around and the dough is not too hard has not been reported so far.
Accordingly, it is an object of the present invention to provide a solid food composition such as a food bar containing insoluble dietary fibers, which prevents powders and ingredients from scattering when folded into bite-size pieces or chewed at eating.

SOLUTION

In order to overcome the problems in the conventional art as described above, the present inventors studied intensively to find that a solid food composition with suppressed scattering of powders and ingredients at eating can be obtained, by adjusting the content of insoluble dietary fibers, sugar and water, by adjusting a particle diameter of a solid composition, and further by using an edible part and/or a non-edible part for a dietary material containing insoluble dietary fibers, to completed the present invention.
That is, the present invention provides the following.

[1] A solid food product composition comprising insoluble dietary fibers, satisfying the following (1) to (7) :

(1) the composition comprises edible part and/or non-edible part of one or more foodstuffs containing insoluble dietary fibers are/is comprised, wherein a content of the foodstuff is 5% by mass or more and 95% by mass or less in terms of total dry mass;

(2) a content of insoluble dietary fibers is 1% by mass or more;

(3) a sugar content is 10% by mass or more and 75% by mass or less;

(4) a moisture content is 20% by mass or less;

(5) 50% cumulative particle diameter after ultrasonication is more than 15 μm and 500 μm or less;

(6) 90% cumulative particle diameter after ultrasonication is 50 μm or more and 1,000 μm or less;

(7) a minimum particle diameter after ultrasonication is 4 μm or less.

[2] The food product composition according to [1], wherein a total fat/oil content is 30% by mass or less.

[3] The food product composition according to [1] or [2], wherein a maximum particle diameter after ultrasonication is 100 μm or more.

[4] The food product composition according to any one of [1] to [3], wherein the 50% cumulative particle diameter after ultrasonication is greater than 30 μm and 300 μm or less.

[5] The food product composition according to any one of [1] to [4], wherein 15% cumulative particle diameter after ultrasonication is less than 100 μm.

[6] The food product composition according to any one of [1] to [5], wherein % cumulative frequency of 100 μm or more after ultrasonication (A) is 5% or more.

[7] The food product composition according to any one of [1] to [6], wherein % cumulative frequency of 4 μm or less after ultrasonication (B) is 1% or more.

[8] The food product composition according to any one of [1] to [7] satisfying the following equation 1:

$$\{(\% \text{ cumulative frequency of } 100 \text{ μm or more after ultrasonication (A)})/(\% \text{ cumulative frequency of } 4 \text{ μm or less after ultrasonication (B)})\} \geq 2.0 \ ... \ \text{equation 1.}$$

[9] The food product composition according to any one of [1] to [8] satisfying the following equation 2:

$$\{(15\% \text{ cumulative particle diameter after ultrasonication})/(\text{minimum particle diameter after ultrasonication})\} \geq 4.0 \ ... \ \text{equation 2.}$$

[10] The food product composition according to any one of [1] to [9] satisfying the following equation 3:

$$\{(\text{modal diameter after ultrasonication})/(\text{minimum particle diameter after ultrasonication})\} \geq 15.0 \ ... \ \text{equation 3.}$$

[11] The food product composition according to any one of [1] to [10], wherein particles before ultrasonication assume a multimodal particle diameter distribution.

[12] The food product composition according to any one of [1] to [11] satisfying the following equation 4:

$$0.05 < \{(\text{modal diameter before ultrasonication})/(\text{second modal diameter before ultrasonication})\} < 10 \ ... \ \text{equation 4.}$$

[13] The food product composition according to any one of [1] to [12], comprising no egg and/or no milk.

[14] The food product composition according to any one of [1] to [13], wherein the foodstuff containing insoluble dietary fibers is one or more selected from the group consisting of nuts/seeds, grains, pulses, vegetables, and fruits.

[15] The food product composition according to [14], wherein the foodstuff containing insoluble dietary fibers is one or more selected from the group consisting of corn, green soybean, pea, carrot, pumpkin, cabbage, kale, sweet potato, paprika, beet, broccoli, spinach, onion, and tomato.

[16] The food product composition according to any one of [1] to [15], wherein the foodstuff containing insoluble dietary fibers is a foodstuff having been subjected to drying.

[17] The food product composition according to any one of [1] to [16], wherein a water activity value of the foodstuff containing insoluble dietary fibers is 0.95 or less.

[18] The food product composition according to any one of [1] to [17], wherein the foodstuff containing insoluble dietary fibers comprises an edible part and the non-edible part.

[19] The food product composition according to any one of [1] to [18], comprising an edible part and the non-edible part of the same type of foodstuff containing insoluble dietary fibers.

[20] The food product composition according to [18] or [19], wherein non-edible part/(edible part + non-edible part) is 2% by mass or more.

[21] The food product composition according to any one of [18] to [20], wherein the non-edible part of the foodstuff containing insoluble dietary fibers comprises one or more selected from the group consisting of core of corn; pod of green soybean; pod of pea; petiole base of carrot; pumpkin seed or pith; core of cabbage; petiole base of kale; both ends of sweet potato; seed or stem end of paprika; skin of beet; leaf and stem of broccoli; plant foot of spinach; protective leaf, bottom part, or head part of onion; and stem end of tomato.

[22] The food according to any one of [1] to [21], further comprising cocoa bean or tea extract.

[23] A food and drink comprising the food product composition according to any one of [1] to [22].

[24] A liquid or solid seasoning comprising the food product composition according to any one of [1] to [22].

[25] A method of manufacturing the food product composition according to any one of [1] to [22], comprising subjecting a foodstuff containing insoluble dietary fibers to a drying.

[26] The method according to [25], further comprising blending a ground product of an edible part and/or a non-edible part of the foodstuff containing insoluble dietary fibers with a sugar.

[27] A method of manufacturing food and drink, comprising incorporating the food product composition according to any one of [1] to [22].

[28] A method of manufacturing a liquid or solid seasoning, comprising incorporating the food product composition according to any one of [1] to [22].

[29] A method of imparting an effect of preventing scattering to a solid food product composition containing insoluble dietary fibers, comprising subjecting a foodstuff in order to contain insoluble dietary fibers to drying and grinding to obtain the food product composition according to any one of [1] to [22].

[30] The method according to [29], further comprising blending the foodstuff having been subjected to drying treatment and grinding, with a sugar.

ADVANTAGEOUS EFFECT OF THE INVENTION

The present invention provides a solid food composition such as a food bar containing insoluble dietary fibers, which prevents powders and/or ingredients from scattering when folded into bite-size pieces or chewed at eating.

DETAILED DESCRIPTION OF THE INVENTION

Hereinafter, examples of embodiments the present invention will be described, but the present invention is not limited to these aspects, and can be implemented with any modifications without departing from the gist thereof.

The present invention relates to a solid food product composition containing insoluble dietary fibers (the food product composition of the present invention).

[Solid food product composition]

In the present invention, the solid food product composition refers to a so-called solid or semi-solid food product composition and examples thereof include, but are not particularly limited to, confectioneries such as stick, granola, cracker, caramel, gummy, and chips and seasonings such as butter and margarine. When a viscosity measurement value determined by a Bostwick viscometer at 20°C is unmeasurable, it is preferred because the food product composition of the present invention can maintain its form while containing the edible part and/or the non-edible part of a foodstuff. Specifically, the Bostwick viscometer having a trough length of 28.0 cm is used with a viscosity measurement value, that is, a flow-down distance of a sample in a trough being at most 28.0 cm. For example, the viscosity measurement value can be obtained by installing a KO-type Bostwick viscometer (manufactured by Fukayatekkousyo) horizontally using a level, closing the gate before filling up the reservoir with a sample whose temperature is adjusted to 20°C, counting time at the same time when a trigger is depressed to open the gate, and then measuring the flow-down distance of the material in the trough at a point of time after a lapse of 1 second. It is preferred that the food product composition of the present invention do not flow down under the aforementioned conditions and thus the flow-down distance thereof cannot be measured, and the viscosity measurement value thereof be unmeasurable.

[Insoluble dietary fiber]

The food product composition of the present invention contains insoluble dietary fibers. In the present invention, "dietary fiber" means a whole of indigestible components in food products, the components being not digested by a human digestive enzyme. Also in the present invention, the "insoluble dietary fiber" refers to water-insoluble one among dietary fibers. Examples of the insoluble dietary fibers include, but are not limited to, lignin, cellulose, hemicellulose, chitin, and chitosan. However, a food product composition containing lignin, in particular, acid-soluble lignin is preferred among the insoluble dietary fibers because an effect that the food product composition becomes not excessively hard can be obtained by applying the present invention.

The food product composition of the present invention contains insoluble dietary fibers at a certain content or higher. Specifically, the lower limit of the content of insoluble dietary fibers in the food product composition of the present invention is 1% by mass or more. The lower limit is above all preferably 1.5% by mass or more, further preferably 2% by mass or more, further preferably 2.5% by mass or more, especially preferably 3% by mass or more, or 3.5% by mass or more, or 4% by mass or more, particularly preferably 5% by mass or more, and especially preferably 6% by mass or more. It is preferred to adjust the content of insoluble dietary fibers to the aforementioned lower limit or more from the viewpoint of preventing scattering at eating. On the other hand, the upper limit of the aforementioned content is not limited, but it is preferably 50% by mass or less, above all preferably 40% by mass or less, further preferably 30% by mass or less, and particularly preferably 20% by mass or less from the viewpoint of favorable texture.

The food product composition of the present invention contains the insoluble dietary fibers derived from at least one or more foodstuffs containing insoluble dietary fibers. In addition to this, the food product composition of the present invention may contain the insoluble dietary fibers derived from stuffs other than foodstuffs. When the food product composition of the present invention contains the insoluble dietary fibers derived from stuffs other than foodstuffs, its origin is not limited. For example, the insoluble dietary fibers may be one derived from various natural materials other than the foodstuff containing insoluble dietary fiber or one obtained by synthesis, or a mixture of the two of them may be used. When the insoluble dietary fibers derived from natural materials is used, the insoluble dietary fiber contained in one or more natural materials may be used after isolation/purification, or the natural material containing insoluble dietary fibers may be used as it is.

In the present invention, methods of measuring the content of insoluble dietary fibers in the food product composition are not particularly limited, and common methods can be used. For example, a method in accordance with the methods described in "The Food Labeling Standards (Cabinet Office Ordinance, No. 10, 2015)" and "Analytical Manual for the Standard Tables of Food Composition in Japan 2015 (Seventh Revised Edition)" can be used. Specific examples thereof include the modified Prosky method.

[Foodstuff containing insoluble dietary fiber]

The food product composition of the present invention contains a foodstuff containing insoluble dietary fibers. The content thereof is set such that the ratio of the total dry mass of the edible part and the non-edible part of the foodstuff containing insoluble dietary fibers to the total mass of the food product composition is 5% by mass or more. The content is above all preferably 6% by mass or more, further preferably 10% by mass or more, and especially preferably 15% by mass or more. The upper limit of the aforementioned proportion is 95% by mass or less. The proportion is above all preferably 90% by mass or less, further preferably 80% by mass or less, further preferably 70% by mass or less, and especially preferably 60% by mass or less.

Examples of the kinds of the foodstuff containing insoluble dietary fibers include vegetable foodstuffs, microbial foodstuffs, and animal foodstuffs. Any of them may be used, but vegetable foodstuffs are preferred. Examples of the vegetable foodstuff include, but are not limited to, nuts/seeds, grains, pulses, vegetables, and fruits. These foodstuffs may be used alone or in any combination of two or more.

The kind of nuts/seeds is not limited as long as the insoluble dietary fibers are contained in the edible part and/or the non-edible part thereof. Examples of seeds include, but are not limited to, almond, hemp, flax, perilla, cashew, pumpkin seed, Japanese torreya, ginkgo nut, chestnut, walnut, poppy, coconut, sesame, shii, tochi, lotus seed, water chestnut, pistachio, sunflower seed, Brazil nut, hazel nut, pecan nut, macadamia nut, pine, and peanut. Above all, almond, cashew, macadamia nut, pistachio, hazel nut, coconut, and the like are preferred, and almond, cashew, and hazel nut are further preferred.

The kind of grains is not limited as long as the insoluble dietary fibers is contained in the edible part and/or the non-edible part thereof. Examples of grains include, but are not limited to, amaranth, foxtail millet, common oat, barley, proso millet, quinoa, common wheat, rice, sugar cane, buckwheat, corn (Maize), Job's tears, Japanese barnyard millet, fonio, and sorghum. Above all, corn is preferred, and sweetcorn is further preferred.

The kind of pulses is not limited as long as the insoluble dietary fibers is contained in the edible part and/or the non-edible part thereof. Examples of pulses include, but are not limited to, kidney bean, scarlet runner bean, red bean, green soybean, pea (for example, green pea), pigeon pea, mung bean, cowpea, adzuki bean, broad bean, soybean, black bean, chickpea, lentil (Lens esculenta), lentil (Lens culinaris), peanut, lupin bean, grass pea, locust bean, coffee bean, and cocoa bean. Above all, green soybean, pea, black bean, and the like are preferred, and green soybean and pea (in particular, green pea) are further preferred. Green soybean is a soybean that is harvested with pods in an unripe state without drying before harvesting and its bean exhibits a green appearance. As the non-edible part, one being not dried before harvesting is more preferred than soybean which is dried before harvesting until its color changes, and particularly when the non-edible part is used, green soybean is preferably used, from the viewpoint of nutritional value. It is preferred to use the cocoa bean (in particular, cocoa nib which is a processed product thereof) since it significantly suppresses the bitter taste of the composition.

The kind of vegetables is not limited as long as the insoluble dietary fibers are contained in the edible part and/or the non-edible part thereof. Examples thereof include, but are not limited to, globe artichoke, chive, angelica, asparagus, aloe, gourd, green bean, udo, pea sprout, podded pea, snap pea, okra, turnip, pumpkin, leaf mustard, cauliflower, chrysanthemum, cabbage, cucumber, Japanese victory onion, water morning glory, watercress, arrowhead, kale, burdock, spinach mustard, stem musturd, shishito, perilla, yandlong bean, garland chrysanthemum, ginger, taro, turnip, zucchini, water dropwort, celery, tatsoi, Japanese radish, leaf mustard, moso bamboo, onion, chicory, green bok choy, chili, tomato, eggplant, rape, bitter melon, Chinese chive, carrot, nozawana, Heading Chinese cabbage, bok choy, basil, parsley, beet, sweet pepper, Japanese butterbur, broccoli, sponge gourd, spinach, horseradish, mizuna, Japanese hornwort, Japanese ginger, bean sprout, cucumber, nalta jute, lily, Japanese wormwood, rakkyo, rocket salad, garden rhubarb, head lettuce, east Indian lotus, wakegi, wasabi, bracken fern, herbs (such as coriander, sage, thyme, basil, oregano, rosemary, mint, lemongrass, and dill), potatoes (such as Jerusalem-artichoke, sweet potato, satoimo, potato, purple sweet potato, and yacon), and mushrooms (such as shiitake, matsutake, Jew's ear, maitake, and button mushroom). Above all, carrot, pumpkin, cabbage, kale, paprika, beet, broccoli, spinach, onion, tomato, potatoes, and the like are preferred, and carrot, pumpkin, kale, paprika, spinach, beet, broccoli, tomato, and sweet potato are particularly preferred.

The kind of fruits is not limited as long as the insoluble dietary fibers is contained in the edible part and/or the non-edible part thereof. Examples of fruits include, but are not limited to, acerola, avocado, apricot, strawberry, fig, mume, citrus fruits (such as iyo, Satsuma mandarin, orange, grapefruit, lime, and lemon), olive, Japanese persimmon, kiwi, guava, coconut, pomegranate, watermelon, Japanese plum, cherry (such as cherry and black cherry), jujube, pineapple, blue honeysuckle berry, banana, papaya, loquat, grape, berries (such as blueberry and raspberry), mango, mangosteen, melon, peach, and apple. Above all, avocado, strawberry, berry, citrus fruits, grape, apple, and the like are preferred, and strawberry, apple, and the like are particularly preferred.

Above all, the foodstuff containing insoluble dietary fibers is preferably a vegetable foodstuff. Examples thereof include, but are not limited to, for example, vegetables (containing potatoes and mushrooms), fruits, spices, algae, grains, nuts/seeds, and pulses. These foodstuffs may be used alone or in any combination of two or more. In particular, since a higher content of vegetables increases the nutritional value more, resulting in a consumer-preferred quality, and thus the content of vegetables is preferably 5% by mass or more, above all preferably 8% by mass or more, further preferably 10% by mass or more, especially preferably 12% by mass or more in the total content of the foodstuff containing insoluble dietary fibers. The upper limit of the aforementioned proportion is preferably 80% by mass or less, above all preferably 74% by mass or less, further preferably 65% by mass or less, and especially preferably 60% by mass or less.

In the present invention, the foodstuff containing insoluble dietary fibers having a water activity value within a predetermined range is preferably used from the viewpoint of storage properties. Specifically, the water activity value of the foodstuff containing insoluble dietary fibers is preferably 0.95 or less, above all preferably 0.9 or less, further preferably 0.8 or less, and especially preferably 0.65 or less. Since the water activity value of common fruits and vegetables is higher than the aforementioned upper limit value in many cases, such a foodstuff is preferably used as the foodstuff containing insoluble dietary fibers after being subjected to the drying described below in advance. On the other hand, the lower limit of the water activity value of the foodstuff containing insoluble dietary fibers is not particularly limited and preferably 0.10 or more, above all preferably 0.20 or more, further preferably 0.30 or more, and especially preferably 0.40 or more. The water activity value of the foodstuff can be measured in accordance with common methods using a common water activity measuring apparatus.

The foodstuff containing insoluble dietary fibers may be used as it is, or may be used after being subjected to treatment such as drying, heating, removal of harshness, peeling, removal of seeds, afterripening, salting, and processing of fruit peels.

[Other foodstuffs]

The food product composition of the present invention may contain other foodstuffs in addition to the aforementioned foodstuff containing insoluble dietary fibers. Specifically, other foodstuffs refer to foodstuffs or ingredients having a particle diameter larger than 2,000 μm (2 mm) which is not to be the measurement object of a laser diffraction particle diameter distribution measurement. Examples of such other foodstuffs include vegetable foodstuffs, microbial foodstuffs, and animal foodstuffs, and any of them may be used. These foodstuffs may be used alone or in any combination of two or more.

These foodstuffs may be used as they are, or may be used after being subjected to various treatments (for example, drying, heating, removal of harshness, peeling, removal of seeds, afterripening, salting, and processing of fruit peels).

[Edible part and non-edible part of foodstuff]

The food product composition of the present invention contains the edible part and/or the non-edible part of the foodstuff containing insoluble dietary fibers. In addition to that, the food product composition of the present invention may contain the edible part and/or the non-edible part of other foodstuffs (containing no insoluble dietary fibers). Hereinafter, the edible part and/or the non-edible part of the foodstuff will be described mainly focusing on the case of the foodstuff containing insoluble dietary fibers.

In the present invention, the "non-edible part" of the foodstuff represents the part of the foodstuff which is usually not suitable for drinking and eating or the part which is to be disposed of in usual dietary habits, and the "edible part" represents the part excluding the disposal site (non-edible part) from the whole foodstuff (for example, purchased state). Particularly in the case of the foodstuff containing insoluble dietary fibers, the part containing insoluble dietary fibers conventionally has many parts that are not available for eating and to be disposed of due to bad feeding performance and bad compatibility with other food products. In the present invention, the non-edible part containing such insoluble dietary fibers can be suitably used.

The site and the ratio of the non-edible part of the foodstuff can be of course understood by those skilled in the art who handles the foodstuff or the processed product of the foodstuff. For example, the "disposal site" and the "disposal ratio" described in the Standard Tables of Food Composition in Japan 2015 (Seventh Revised Edition) can be respectively treated as the site and the ratio of the non-edible part. The following Table 1 lists examples of the foodstuff containing insoluble dietary fibers and the "disposal site" and the "disposal ratio" (that is, the site and the ratio of the non-edible part) described in the Standard Tables of Food Composition in Japan 2015 (Seventh Revised Edition) with respect to these foodstuffs. The site or the ratio of the edible part can also eventually be understood from the site or the ratio of the non-edible part in the foodstuff.

[Table 1]

| Foodstuff containing insoluble dietary fibers | Site of non-edible part (disposal site) | Ratio of non-edible part (disposal ratio) |
|---|---|---|
| Vegetables/green soybean/raw | Pod | 45% |
| Vegetables/(corns)/sweetcorn/immature seed, raw | Bract, pistil, and cob | 50% |
| Vegetables/(pumpkins and squashes)/Japanese pumpkin/fruit, raw | Pith, seed, and both ends | 9% |
| Vegetables/(sweet peppers)/red sweet pepper/fruit, raw (paprika) | Stem end, core, and seed | 10% |
| Vegetables/beet/root, raw | Root tip, skin, and petiole | 10% |
| Vegetables/broccoli/inflorescence, raw | Leaf and stem | 50% |
| Vegetables/(tomatos)/tomato/fruit, raw | Stem end | 3% |
| (Cabbages)/cabbage/head-forming leaf, raw | Core | 15% |

Specific examples of the non-edible part of the foodstuff containing insoluble dietary fibers include skin, seed, core, and draff of the foodstuff containing insoluble dietary fibers. Above all, since rich nutrients are remained in the non-edible part of, without limitation, corn (for example, sweetcorn), green soybean, pea, carrot, pumpkin, cabbage, kale, paprika, beet, broccoli, spinach, onion, tomato, potato (for example, sweet potato), strawberry, citrus fruits (for example, satsuma mandarin and yuzu), apple, and grape, they can be suitably used in the present invention. Specific preferred examples thereof include bract or pistil and cob (core) of corn (for example, sweetcorn); pod of green soybean or pea; root tip and petiole base of carrot; pumpkin seed and pith; core of cabbage; petiole base of kale; seed and stem end of paprika; skin of beet; leaf and stem of broccoli; plant foot of spinach; protective leaf, bottom part, or head part of onion; stem end of tomato; surface layer and both ends of potato (for example, sweet potato); stem end and stalk of strawberry; peel, seed, and pith of citrus fruits (for example, satsuma mandarin and yuzu); fruit peel and seed of grape; and core of apple. In addition, one not containing a component harmful to the human body to the extent that affects the human body is preferably used.

In particular, it is preferred to use one or more non-edible part of the foodstuff containing insoluble dietary fibers selected from the group consisting of core of corn (in particular, sweetcorn); pod of green soybean; pod of pea (in particular, green pea); petiole base of carrot; pumpkin seed or pith; core of cabbage; petiole base of kale; both ends of sweet potato; seed or stem end of paprika; skin of beet; leaf and stem of broccoli; plant foot of spinach; protective leaf, bottom part, or head part of onion; and stem end of tomato, from the viewpoint of productivity.

In the foodstuff used in the food product composition of the present invention, that is, in the foodstuff containing insoluble dietary fibers, only the edible part thereof, or only the non-edible part thereof, or both the edible part and the non-edible part may be used. In particular, it is preferable to contain the non-edible part in terms of improving the effect of suppressing powder and/or ingredients from scattering.

When both the edible part and the non-edible part of the foodstuff containing insoluble dietary fibers to be used in the food product composition of the present invention are used together, each of them may derive from the same type of foodstuff containing insoluble dietary fibers, or they may be any combination of foodstuffs which derive from multiple types of foodstuffs containing insoluble dietary fibers. However, it is preferred that the edible part and the non-edible part each derived from the same type of foodstuff containing insoluble dietary fibers be contained. That is, a part or the whole of the edible part and a part or the whole of the non-edible part each derived from the same type of foodstuff containing insoluble dietary fibers are preferably used because nutrients of such a foodstuff containing insoluble dietary fibers can be effectively taken and the inherent flavor of food materials is improved. Specifically, the proportion of the edible part and the non-edible part each derived from the same type of foodstuff containing insoluble dietary fibers contained in the food product composition is preferably 3% by mass or more, above all preferably 5% by mass or more, further preferably 10% by mass or more, particularly preferably 15% by mass or more, and especially preferably 20% by mass or more. The upper limit of the aforementioned proportion is preferably 80% by mass or less, above all preferably 70% by mass or less, further preferably 60% by mass or less, particularly preferably 55% by mass or less, and especially preferably 50% by mass or less.

In the food product composition of the present invention, the ratio of the non-edible part to the total dry mass of the foodstuff is preferably within a predetermined range, from the viewpoint of improving the quality of taste. Specifically, the dry mass proportion of the "non-edible part/(edible part + non-edible part)" is usually preferably 2% by mass or more, above all preferably 3% by mass or more, further preferably 5% by mass or more, and especially particularly preferably 8% by mass or more. The upper limit of the aforementioned proportion is usually preferably 80% by mass or less, above all preferably 70% by mass or less, and further preferably 60% by mass or less.

[Sugar]

The food product composition of the present invention contains one or two or more sugars. The sugar may be one derived from a raw material such as a foodstuff, or one or two or more sugars may be separately added to the food product composition. When sugar is added to the food product composition, examples of the sugar include, but are not limited to, sugars (glucose, sucrose, fructose, glucofructose syrup, and fructoglucose syrup); sugar alcohols (xylitol, erythritol, and maltitol); artificial sweeteners (sucralose, aspartame, saccharin, and acesulfame K); starch; and starch degradation products. Examples thereof also include foodstuffs containing sugar such as juice derived from plants (including fruit juice) containing these sugars or sap; purified products thereof; and concentrated products thereof. Above all, foodstuffs containing sugar, purified products thereof, concentrated products thereof, and the like are preferred from the viewpoint that the inherent sweetness of food materials are likely to be sensed. Specific examples of the foodstuff containing sugar include fruit juice of fruit, date, sugar cane, maple, and honey.

In the food product composition of the present invention, the lower limit of the sugar content is 10% by mass or more based on the total sugar content in the whole food product composition. The lower limit is above all preferably 15% by mass or more, further preferably 20% by mass or more, and especially, most preferably 25% or more. The sugar content is preferably equal to or higher than the aforementioned lower limit because the effect of preventing scattering at eating is improved. The upper limit of the sugar content in the whole food product composition of the present invention is 75% by mass. The upper limit is above all preferably 72% by mass or less, further preferably 70% by mass or less, and particularly further preferably 60% by mass or less. When the sugar content exceeds the aforementioned upper limit, the food product composition may be hardened.

In the present invention, common methods can be used as the measuring method of the sugar content. Examples thereof include a method in accordance with the methods described in "The Food Labeling Standards (Cabinet Office Ordinance, No. 10, 2015)" and "Analytical Manual for the Standard Tables of Food Composition in Japan 2015 (Seventh Revised Edition)". Specific examples thereof include high-performance liquid chromatography.

[Fat/oil]

The food product composition of the present invention may contain one or two or more fats/oils. When two or more fats/oils are contained, the combination of two or more fats/oils or the ratio among them are arbitrary.

Examples of the kind of fat/oil include edible fats/oils, and various fatty acids and food products using them as the raw material, and edible fats/oils are preferably used. The edible fat/oil may be the fat/oil contained in the foodstuff, but another edible fat/oil different from the foodstuff is preferably added since it is compatible with the foodstuff. When another edible fat/oil different from the foodstuff is added, the amount of another edible fat/oil different from such a foodstuff used is preferably adjusted such that it accounts for 10% by mass or more, above all 30% by mass or more of the total fat/oil content of the food product composition.

Specific examples of the edible fat/oil include sesame oil, rapeseed oil, high oleic rapeseed oil, soybean oil, palm oil, cotton oil, corn oil, sunflower oil, high oleic sunflower oil, safflower oil, olive oil, flax oil, rice oil, camellia oil, perilla oil, flavor oil, coconut oil, grapeseed oil, peanut oil, almond oil, avocado oil, cocoa butter, salad oil, canola oil, or MCT (medium chain fatty acid triglyceride), diglyceride, hardened oil, transesterification oil, and animal fats/oils such as milk fat and beef tallow. In particular, liquid edible fats/oils such as sesame oil, olive oil, rapeseed oil, soybean oil, sunflower oil, rice oil, coconut oil, and palm oil are preferred, and an olive oil, a coconut oil, and a rapeseed oil are more preferred from the viewpoint of flavor.

Specific examples of the food product using various fatty acids as the raw material include butter, margarine, shortening, raw cream, and soymilk cream (for example, "Ko-cream" (R) manufactured by Fuji Oil Co., Ltd.).

Above all, an edible fat/oil in a liquid state at ordinary temperatures is more preferably used as the edible fat/oil from the viewpoint of easy manufacturing (the ordinary temperature in the present invention represents 20°C unless otherwise stated in the present invention). The liquid edible fat/oil represents a fat/oil having a liquid fluidity (specifically, the Bostwick viscosity (a flow-down distance measurement value for a sample in a trough measured at a predetermined temperature for a predetermined time) at 20°C for 10 seconds determined by a Bostwick viscometer (in the present invention, one having a trough length of 28.0 cm in which the Bostwick viscosity, that is, the flow-down distance of the sample in the trough is at most 28.0 cm, is used) is 10 cm or more, more preferably 15 cm or more, and further preferably 28 cm or more). Also in the present invention, the fat/oil part in the food product composition (for example, a fat/oil component released when centrifugation is performed at 15,000 rpm for 1 minute) preferably has a liquid fluidity (specifically, the Bostwick viscosity at 20°C for 10 seconds determined by a Bostwick viscometer is 10 cm or more, more preferably 15 cm or more, and further preferably 28 cm or more). When two or more edible fats/oils containing a liquid fat/oil are used, the liquid fat/oil preferably accounts for 90% by mass or more, above all preferably 92% by mass or more, further preferably 95% by mass or more, and particularly preferably 100% by mass based on the total fat/oil.

These edible fats/oils may be used alone or in any combination of two or more. As the edible fat/oil, an edible fat/oil in which the proportion of unsaturated fatty acids (the total proportion of monovalent unsaturated fatty acids and polyvalent unsaturated fatty acids) is more than the proportion of fatty acids is preferred from the viewpoint of easy manufacturing, and an edible fat/oil in which the proportion of unsaturated fatty acids is more than two times the proportion of fatty acids is further preferred.

When the food product composition of the present invention contains the fat/oil, the content thereof is not limited, but the mass ratio of the fat/oil content to the total food product composition is preferably 0.5% by mass or more, above all preferably 1% by mass or more, further preferably 2% by mass or more, further preferably 3% by mass or more, particularly preferably 5% by mass or more, and especially preferably 7% by mass or more, from the viewpoint of improving flavor. On the other hand, when the total fat/oil content in the whole food product composition is too high, the food product composition is likely to have a fatty taste, resulting in high calories, and thus the mass ratio of the fat/oil content to the total food product composition is preferably 30% by mass or less, above all preferably 25% by mass or less, further preferably 20% by mass or less, particularly preferably 18% by mass or less, and especially preferably 15% by mass or less. In particular, the food product composition of the present invention contains foodstuff containing insoluble dietary fibers as described above, and this makes the flavor and the texture of a dough favorable, which in turn enables to decrease the total fat/oil content.

In the present invention, common methods can be used as the measuring method of the total fat/oil content. Examples thereof include a method in accordance with the methods described in "The Food Labeling Standards (Cabinet Office Ordinance, No. 10, 2015)" and "Analytical Manual for the Standard Tables of Food Composition in Japan 2015 (Seventh Revised Edition)". Specific examples thereof include a chloroform-methanol mixture extracting method or a Soxhlet extraction method.

[Other components]

The food product composition of the present invention may contain one or two or more other components in addition to the aforementioned various components. Examples of other components include seasonings, food additives, nutrient components, and binders.

Examples of seasonings, food additives, and the like include soy sauce, miso paste, alcohol, salt, sugars (for example, glucose, sucrose, fructose, glucofructose syrup, and fructoglucose syrup), sugar alcohols (for example, xylitol, erythritol, and maltitol), artificial sweeteners (for example, sucralose, aspartame, saccharin, and acesulfame K), minerals (for example, zinc, potassium, calcium, chrome, selenium, iron, copper, sodium, magnesium, manganese, iodine, and phosphorus), fragrance, spices, pH adjusters (for example, sodium hydroxide, potassium hydrate, lactic acid, citric acid, tartaric acid, malic acid, and acetic acid), dextrin, cyclodextrin, antioxidants (for example, tea extract, green coffee bean extract, chlorogenic acid, spice extract, coffeic acid, rosemary extract, rutin, quercetin, bayberry extract, and sesame extract), emulsifiers (for example, glycerin fatty acid ester, saponin, sucrose fatty acid ester, and lecithin), colorants, and thickening stabilizers. In particular, the tea extract (or a foodstuff containing the tea extract) is preferably blended because the bitter taste of the composition is significantly suppressed.

Examples of nutrient components include vitamins (such as niacin, pantothenic acid, biotin, vitamin A, vitamin B1, vitamin B2, vitamin B6, vitamin B12, vitamin C, vitamin D, vitamin E, vitamin K, and folic acid); animal proteins derived from livestock meat, milk, egg, and the like; vegetable proteins derived from soybean, cereals, and the like; lipids (n-3 fatty acids such as $\alpha$-linolenic acid, EPA, and DHA, n-6 fatty acids such as linoleic acid and arachidonic acid, and the like); and functional components such as dietary fibers and polyphenol.

However, it is preferred that the food product composition of the present invention contain substantially no binder. Examples of binders include foodstuffs containing animal proteins such as egg and milk, and extracts thereof; orthophosphate such as monosodium phosphate and dipotassium phosphate; and polymerized phosphate such as sodium polyphosphate and sodium metaphosphate. The food product composition of the present invention can obtain the effect of preventing scattering at eating without using these binders. It is desired to minimize the use of such a binder also from the viewpoint of providing a quality that satisfies health-conscious consumers. In particular, since egg and/or milk are/is the specific raw material defined in "The Food Labeling Standards (Cabinet Office Ordinance, No. 10, 2015)" and they are also defined as allergen in other countries, a configuration containing substantially no egg or a configuration containing substantially no milk is preferred, and a configuration containing substantially no egg and no milk is most preferred from the viewpoint of consumers which desire no use of allergen. In this case, "containing substantially no" refers to not containing an amount which effects as an allergen, for example, it refers to not containing the total protein amount of the specific raw material which is an object to be listed in "The Food Labeling Standards (Cabinet Office Ordinance, No. 10, 2015)" in Japan.

Specifically, in the food product composition of the present invention, the content of the binder, in particular, the content of components derived from egg and/or milk is preferably 5% by mass or less, above all preferably 3% by mass or less, further preferably 1% by mass or less, and particularly preferably substantially 0% by mass based on the total food product composition. In the present invention, examples of components derived from egg and/or milk include, egg and/or milk in Appendix 1 of "Labeling of Foods Containing Allergens" attached to "The Food Labeling Standards" (Disposal Table No. 139), and specific examples thereof include chicken egg; avian eggs such as eggs from ducks or quails; processed products of chicken eggs; milk such as raw milk, cow milk, and processed milk; dairy products such as cream, butter, cheese, ice cream, condensed milk, powdered milk, powdered milk, cream powder, whey powder, fermented milk, lactic acid bacteria beverage, and milk drink; and food products containing milk or dairy products as a main raw material.

It is preferred that the food product composition of the present invention contain substantially no emulsifier and/or no colorant and/or no thickening stabilizer which are so-called food additives (for example, those described as "colorant", "thickening stabilizer", and "emulsifier" in "Table of food additive names for indication" of Food Additives Indication Pocket Book (2011)). The food product composition of the present invention can improve the firmness of the dough and prevent scattering at eating without using these colorants, thickening stabilizers, emulsifiers, or the like. It is desired to minimize the use of such colorants, thickening stabilizers, and emulsifiers also from the viewpoint of providing a quality that satisfies health-conscious consumers.

In the food product composition of the present invention, specifically in the food product composition of the present invention, the content of the colorant, thickening stabilizer, and emulsifier is preferably 5% by mass or less, above all preferably 3% by mass or less, further preferably 1% by mass or less, and particularly preferably substantially 0% by mass based on the total food product composition, from the viewpoint of providing a quality that satisfies health-conscious consumers.

Furthermore, it is especially desired that the food product composition of the present invention contain substantially no food additive (for example, substances described in "Table of food additive names for indication" of Food Additives Indication Pocket Book (2011) used as food additive applications) from the viewpoint of providing a quality that satisfies health-conscious consumers.

Specifically, in the food product composition of the present invention, the content of the food additive is preferably 5% by mass or less, above all preferably 3% by mass or less, further preferably 1% by mass or less, and particularly preferably substantially 0% by mass based on the total food product composition.

[Moisture]

The food product composition of the present invention contains moisture. The moisture in the food product composition may derive from various components in the food product composition described above, or may further be added as water. In the present invention, the moisture content of the food product composition means the total amount of the moisture amount derived from various components in the food product composition and the moisture amount separately added.

Specifically, the mass ratio of the moisture to the total food product composition moisture is 20% by mass or less. It is above all preferably 15% by mass or less, and particularly preferably 10% by mass or less. Setting the mass ratio of the moisture content to the total food product composition moisture at the aforementioned upper limit value or less is preferred from the viewpoint of easy processing prior to forming and improving shelf-life. On the other hand, the lower limit value of the mass ratio of the moisture content is not limited, but is preferably 0% by mass or more, further preferably 0.5% by mass or more, above all preferably 1.0% by mass or more, and above all conveniently 1.5% by mass or more.

In the present invention, common methods can be used as the measuring method of the moisture content. Examples thereof include a method in accordance with the methods described in "The Food Labeling Standards (Cabinet Office Ordinance, No. 10, 2015)" and "Analytical Manual for the Standard Tables of Food Composition in Japan 2015 (Seventh Revised Edition)". Specific examples thereof include a drying method by heating under reduced pressure or drying method by heating under ordinary pressure.

[Characteristics for particle diameter]

The food product composition of the present invention contains the insoluble dietary fibers in the form of fine particles. Such fine particles may be composed of only one or two or more insoluble dietary fibers, or may be formed from one or more insoluble dietary fibers and one or more other components.

In the food product composition of the present invention, at least part of the fine particles containing insoluble dietary fibers described above is aggregated together to form a complex which can be pulverized by agitation. The food product composition of the present invention can achieve the effect of preventing scattering at eating by containing insoluble dietary fibers in such a complex state. In the present invention, ultrasonication is envisaged as a typical example of the external agitation which causes pulverization of a fine particle complex unless otherwise stated. In the present invention, "ultrasonication" represents, unless otherwise specified, a treatment of applying the ultrasonic wave having a frequency of 40 kHz to a measurement sample with an output of 40 W for 3 minutes.

The food product composition of the present invention contains a complex of fine particles containing insoluble dietary fibers, and can achieve the effect of preventing scattering at eating by modulating various physical properties such as the particle diameter of such fine particles and the complex before and after adding agitation to the range described below. The reason thereof is unclear; however, a complex forms a characteristic shape as if multiple dietary fibers were gathered in the food product composition, and this complex is considered to exert various effects.

In particular, the food product composition of the present invention contains a plurality of fine particle complexes in a state where no agitation is added, that is, in a state before performing ultrasonication, whereas in a state where agitation is added, that is, in a state after performing ultrasonication, a part or the whole of the fine particle complex is disintegrated to form single fine particles. Thus, various parameters for the particle diameter largely vary before and after the ultrasonication.

The "particle diameter" in the present invention represents particle diameters all measured on the volumetric basis, unless otherwise specified. In addition, the "particle" in the present invention is a concept that may contain not only a single fine particle, but also a fine particle complex formed by aggregating each single fine particle, unless otherwise specified.

[Characteristics for cumulative particle diameter (d15, d50, and d90)]

In the food product composition of the present invention, 15% cumulative particle diameter, 50% cumulative particle diameter, and 90% cumulative particle diameter of the particle diameter after agitation, that is, after ultrasonication (each appropriately referred to as "d15", "d50", and "d90") are adjusted within a predetermined range.

It is preferred to adjust the particle diameter d15 after ultrasonication within a predetermined range because the flavor can be more strongly sensed. Specifically, the lower limit of the particle diameter d15 after ultrasonication is preferably 3 $\mu$m or more, and further preferably 4 $\mu$m or more. On the other hand, the upper limit of d15 is preferably less than 100 $\mu$m, above all preferably less than 50 $\mu$m, and further preferably less than 40 $\mu$m. The particle diameter d15 of the food product composition is defined as the particle diameter at which, when the particle diameter distribution of the food product composition is divided into two from a certain particle diameter, the ratio of the cumulative value of the % particle frequency on the large side to the cumulative value of the % particle frequency on the small side is 85:15.

It is preferred to adjust the particle diameter d50 after ultrasonication within a predetermined range from the viewpoint of the firmness of the dough. When the dough is firm, the shape of the dough when held in a hand at eating can be retained, and consumers can further feel eating response. The particle diameter d50 after ultrasonication is preferably adjusted within a predetermined range because it is able to make the dough not too firm and to adjust the dough to have moderate firmness. Specifically, the lower limit of the particle diameter d50 after ultrasonication is greater than 15 $\mu$m. It is above all preferably greater than 30 $\mu$m, further preferably greater than 35 $\mu$m, and particularly preferably greater than 50 $\mu$m. On the other hand, the upper limit value of d50 is 500 $\mu$m or less. It is above all preferably 400 $\mu$m or less, above all preferably 300 $\mu$m or less, above all preferably 250 $\mu$m or less, above all preferably 220 $\mu$m or less, and further preferably 200 $\mu$m or less.

The particle diameter d50 of the food product composition is defined as the particle diameter at which, when the particle diameter distribution of the food product composition is divided into two from a certain particle diameter, the ratio of the cumulative value of the % particle frequency on the large side to the cumulative value of the % particle frequency on the small side is 50:50.

It is preferred to adjust the particle diameter d90 after ultrasonication within a predetermined range from the viewpoint of preventing scattering. Specifically, the lower limit of the particle diameter d90 after ultrasonication is 50 $\mu$m or more. It is above all preferably 80 $\mu$m or more, further preferably 100 $\mu$m or more, further preferably 140 $\mu$m or more, particularly preferably 180 $\mu$m or more, and especially preferably 200 $\mu$m or more. On the other hand, the upper limit thereof is 1,000 $\mu$m or less. It is above all preferably 900 $\mu$m or less, and further preferably 800 $\mu$m or less.

The particle diameter d90 of the food product composition is defined as the particle diameter at which, when the particle diameter distribution of the food product composition is divided into two from a certain particle diameter, the ratio of the cumulative value of the % particle frequency on the large side to the cumulative value of the % particle frequency on the small side is 10:90.

[Characteristics for minimum and maximum particle diameter]

In the food product composition of the present invention, the minimum particle diameter ($d_{min}$) after agitation, that is, after ultrasonication is 4 $\mu$m or less. It is above all preferably 3 $\mu$m or less, and further preferably 2 $\mu$m or less. With the minimum particle diameter ($d_{min}$) after agitation within the aforementioned range, the food product composition of the present invention may have an excellent effect of preventing scattering at eating. The minimum particle diameter ($d_{min}$) after agitation within the aforementioned range can lead to an increase in the firmness of the dough.

In the food product composition of the present invention, the ratio of the 15% cumulative particle diameter to the minimum particle diameter after agitation (after ultrasonication) {(15% cumulative particle diameter after ultrasonication)/(minimum particle diameter after ultrasonication)} is preferably 4.0 or more, above all preferably 4.5 or more, further preferably 5.0 or more, and particularly preferably 6.0 or more. With the aforementioned ratio within the aforementioned range, the food product composition of the present invention tends to have further satisfactory flavor.

In the food product composition of the present invention, the maximum particle diameter after agitation (after ultrasonication) is preferably included within a predetermined range because the dough becomes not too firm and not hard and an airy texture can be imparted. Specifically, the maximum particle diameter of the food product composition of the present invention after agitation, that is, after ultrasonication is preferably 100 $\mu$m or more, above all preferably 300 $\mu$m or more, and particularly preferably 500 $\mu$m or more. On the other hand, the maximum particle diameter of the food product composition of the present invention after agitation, that is, after ultrasonication is not limited, but is preferably 2,000 $\mu$m or less, and above all preferably 1800 $\mu$m or less.

Since the food product composition of the present invention is a blended system, it is difficult to precisely judge the maximum particle diameter by eye, but at least the lower limit value of the maximum particle diameter can be roughly determined by eye. That is, when the maximum particle diameter observed under a microscope is larger than a certain value, the probability that the actual maximum particle diameter is also larger than the certain value is considered to be high.

In the food product composition of the present invention, the ratio of the maximum particle diameter after agitation (after ultrasonication) to the 90% cumulative particle diameter (d90) {(the maximum particle diameter after ultrasonication)/(d90 after ultrasonication)} preferably satisfies a predetermined range because the dough is not too firm and not hard and an airy texture is increased. Specifically, the ratio of d90 to the maximum particle diameter after ultrasonication {(the maximum particle diameter after ultrasonication)/(d90 after ultrasonication)} is preferably 6.0 or less, and further preferably 5.0 or less.

[Characteristic for cumulative frequency of particle diameter]

In the food product composition of the present invention, the cumulative frequency of the particle diameter in a predetermined range after agitation (after ultrasonication) is preferably adjusted within a predetermined range from the viewpoint of dough.

Specifically, in the food product composition of the present invention, the cumulative frequency of the particle diameter of 100 $\mu$m or more after ultrasonication is preferably 5% or more because the dough has a more airy texture, and it is above all preferably 10% or more, further preferably 15% or more, and particularly preferably 20% or more.

Also, in the food product composition of the present invention, the cumulative frequency of the particle diameter of 4 $\mu$m or less after ultrasonication is preferably 1% or more because moderate firmness can be imparted to the dough, and it is above all preferably 1.5% or more, further preferably 2% or more, and particularly preferably 3% or more.

It is preferred that either one of the cumulative frequency of the particle diameter of 100 $\mu$m or more after ultrasonication and the cumulative frequency of the particle diameter of 4 $\mu$m or less after ultrasonication satisfy the aforementioned range, and it is more preferred that both of them satisfy the aforementioned range.

Further, in the food product composition of the present invention, the ratio of the cumulative frequency of the particle diameter of 100 $\mu$m or more after agitation (after ultrasonication) and the cumulative frequency of the particle diameter of 4 $\mu$m or less after agitation (after ultrasonication) is preferably adjusted within a predetermined range because fragility during storage is ameliorated.

Specifically, the ratio of the cumulative frequency of the particle diameter of 100 $\mu$m or more after ultrasonication to the cumulative frequency of the particle diameter of 4 $\mu$m or less after ultrasonication {(% cumulative frequency of 100 $\mu$m or more after ultrasonication)/(% cumulative frequency of 4 $\mu$m or less after ultrasonication)} is preferably two times or more, above all preferably three times or more, further preferably four times or more, and particularly preferably five times or more.

[Characteristics for modal diameter and second modal diameter]

In the food product composition of the present invention, the ratio of the modal diameter to the minimum particle diameter after agitation (after ultrasonication) preferably satisfies a predetermined range because the effect of preventing scattering is more increased. Specifically, the ratio of the modal diameter after ultrasonication to the minimum particle diameter after ultrasonication {(modal diameter after ultrasonication)/(minimum particle diameter after ultrasonication)} is preferably 15 or more, above all preferably 20 or more, and further preferably 30 or more.

In the present invention, the modal diameter represents the particle diameter of the channel having the largest % particle frequency in the particle diameter distribution for each channel obtained by measuring the food product composition using a laser diffraction particle diameter distribution measuring apparatus. When there are multiple channels which has the same % particle frequency, the particle diameter of a channel having the smallest particle diameter among these channels is employed. When the particle diameter distribution is a normal distribution, its value corresponds to a median size, whereas when the particle diameter distribution is skewed, particularly when multiple peaks are present in the particle diameter distribution, the numerical values differ largely.

In the food product composition of the present invention, the particle diameter distribution before agitation (before ultrasonication) is preferably a multimodal particle diameter distribution. The composition preferably has a multimodal particle diameter distribution because flavor release of the foodstuff is enhanced and flavor is improved.

In the present invention, the multimodal particle diameter distribution refers to a particle diameter distribution which contains at least a modal diameter and a second modal diameter, and in which peaks are separated. In order to confirm whether the food product composition has the multimodal particle diameter distribution, it is only required to measure the particle diameter distribution of the food product composition before ultrasonication using a laser diffraction particle diameter distribution measuring apparatus and confirm whether the obtained particle diameter distribution for each channel has at least a modal diameter and a second modal diameter and also confirm whether peaks thereof are separated.

The second modal diameter represents the particle diameter of the channel having the largest % particle frequency other than the above modal diameter. When there are multiple channels having the same % particle frequency next to the modal diameter, the particle diameter of a channel having the smallest particle diameter among these channels is employed. When the modal diameter and the second modal diameter are adjacent with each other and both peaks are not separated, for example, it means that the particle diameter distribution is a unimodal particle diameter distribution such as normal distribution and does not satisfy the present requirements.

In the food product composition of the present invention, when the ratio of the modal diameter to the second modal diameter before agitation (before ultrasonication) satisfies a predetermined range, flavor release is further enhanced. Specifically, in the food product composition of the present invention, the ratio of the modal diameter before agitation to the second modal diameter before agitation {(modal diameter before agitation)/(second modal diameter before agitation)} is preferably 0.05 or more, above all preferably 0.08 or more, and further preferably 0.1 or more. On the other hand, the upper limit of the aforementioned ratio is preferably 10 or less, above all preferably 8 or less, and further preferably 6 or less.

[Method of measuring various characteristics for particle diameter]

The method of measuring various parameters for the particle diameter in the present invention is not limited. Typically, the particle diameter distribution may be measured by a conventionally known method, and the given particle diameter distribution may be used for calculating the various parameters. As a specific example of an apparatus, conditions, and procedures for measuring the particle diameter distribution, the apparatus, conditions, and procedures described in Examples can be used.

For the measurement of each sample, solutions are subjected to measurement, which are obtained by immersing blocks of about 1 cm square obtained from food product composition samples in a 50 ml of hot water at about 80°C, followed by allowing the mixture stand for about 5 minutes, and thereafter, stirring thoroughly with a spatula, suspending in hot water, and passing through a 7.5-mesh sieve having an opening of 2.36 mm and a wire diameter of 1.0 mm according to the new JIS.

The solvent for the measurement may be any solvent as long as it hardly affects the structure of the insoluble dietary fibers in the food product composition, and for example, distilled water can be used. When the measuring apparatus and software described in Examples are used, it is only required for the measurement to press the cleaning button of the software to conduct cleaning, followed by pressing the Set zero button of the software to conduct zero adjustment, and directly charging the sample until the concentration becomes within an appropriate range by sample loading. For the sample before agitation, that is, the sample not to be subjected to ultrasonication, the sample concentration is adjusted within the appropriate range in two times of sample loading after charging the sample, and immediately after the adjustment, a laser diffraction measurement is performed at a flow velocity of 60% and at a measurement time of 10 seconds, and then it is only required to determine the result as a measurement value. On the other hand, when the sample after agitation, that is, the sample being subjected to ultrasonication is measured, the sample being subjected to ultrasonication in advance may be charged, or ultrasonication may be performed using the aforementioned measuring apparatus after charging the sample, and subsequently, the measurement may be performed. In the latter case, after the sample not being subjected to ultrasonication is charged into the apparatus and the sample concentration is adjusted within the appropriate range by sample loading, the ultrasonication button of the software is pressed to perform ultrasonication. Thereafter, a degassing is performed three times and the sample loading process is performed again. After it is confirmed that the concentration is still within the appropriate range, a laser diffraction at a flow velocity of 60% and at a measurement time of 10 seconds is performed, and the result can be determined as a measurement value. The parameter for the measurement is, for example, distribution display: volume, refractive index of particle: 1.60, refractive index of solvent: 1.333, measuring upper limit ($\mu$m) = 2,000.00 $\mu$m, and measuring lower limit ($\mu$m) = 0.021 $\mu$m.

When various particle diameters of the food product composition in the present invention are determined, it is preferred that the particle diameter distribution for each channel (CH) is measured at first and then the particle diameter for each channel described in Table 14 described below is used as the standard to determine the various particle diameters. Specifically, the % particle frequency for each channel (also referred to as "the % particle frequency of channel ** ") can be determined by measuring the frequency of particles whose particle diameter is not more than the particle diameter defined for each channel in Table 14 below and larger than the particle diameter defined for the channel having one higher number (in the largest channel within the measuring range, a particle diameter at the measuring lower limit) for each channel in Table 14 below, and by using the total frequency of all channels within the measuring range as a denominator. For example, the % particle frequency of channel 1 represents the % frequency of particles having a particle diameter of 2,000.00 $\mu$m or less and larger than 1826.00 $\mu$m. The maximum particle diameter and the minimum particle diameter can be determined from the results obtained by measuring the % particle frequency for each of the 132 channels in Table 14 below. Among the channels whose % particle frequencies are recognized, the particle diameter of the channel having the largest particle diameter can be determined as the maximum particle diameter and the particle diameter of the channel having the smallest particle diameter can be determined as the minimum particle diameter. In other words, when the maximum particle diameter or the minimum particle diameter of the food product composition are measured by using a laser diffraction particle diameter distribution measuring apparatus in the present invention, the preferred measurement conditions thereof contain measuring the particle diameter of an object having the measuring upper limit of 2,000.00 $\mu$m and the measuring lower limit of 0.021 $\mu$m by using distilled water as the measuring solvent, immediately after charging the sample.

[Manufacturing method of food product composition]

The manufacturing method of the food product composition of the present invention is not limited, and one may mix the foodstuff containing insoluble dietary fibers optionally with other foodstuffs, fats/oils, sugars, and/or other components in an appropriate ratio while adjusting so as to achieve the aforementioned various properties.

However, it is preferred to use a foodstuff having been subjected to a drying treatment in advance, that is, a dried foodstuff as the foodstuff containing insoluble dietary fibers and as other foodstuffs optionally used from the viewpoint of storage properties and flavor of the food product composition. Any method commonly used in the drying of the food product can be used as a method of drying the foodstuff. Examples thereof include sun drying, shade drying, freeze drying, air drying (for example, hot air drying, fluid bed drying, spray drying, drum drying, and low-temperature drying), pressure drying, reduced-pressure drying, microwave drying, and oil heat drying. Above all, an air drying method (for example, hot air drying, fluid bed drying, spray drying, drum drying, and low-temperature drying) or a freeze drying method is preferred in view that the degree of the change of the inherent color tone and the flavor of the foodstuff is small and the fragrance (such as a burning smell) other than the food product can be controlled.

The foodstuff containing insoluble dietary fibers and other foodstuffs optionally used are preferably one obtained by grinding in advance from the viewpoint of easy production of the food product composition. The means for grinding treatment is not particularly limited, and the temperature and the pressure during the treatment are also arbitrary. Examples of the apparatus for grinding treatment include instruments such as a blender, a mixer, a mill, a kneader, a grinder, a pulverizer, and an attritor, but any of which may be used; and either dry grinding or wet grinding may be performed.

[Property and application of food product composition]

The food product composition of the present invention prevents powders and/or ingredients from scattering at eating. Scattering of the solid food product composition refers to that when the food product composition is broken, bitten, or gnawed so as to divide a part of the whole food product composition, the foodstuff contained in the solid food product composition, for example, the particles contained in the foodstuff containing insoluble dietary fibers, or the ingredients contained in the solid food product composition such as dried fruit, nut, or puff, are scattered around due to the force applied, so that the powdery foodstuffs or ingredients are moved from the place where the food product composition exists to distanced places. Due to this characteristic, materials to be pulverized having characteristics of the composition of the present invention can be pulverized to manufacture two or more compositions in the manufacture of the composition of the present invention, so that the composition of the present invention can be manufactured with reduced production loss.

The food product composition of the present invention in its preferred embodiment has the dough not too firm and an airy texture.

The food product composition of the present invention by itself, or the food product composition being subjected to a crushing treatment can be eaten as the food product as they are. In addition, the food product composition of the present invention itself or the food product composition after being crushed can be suitably used as a part of food and drink, or a part of a raw material or a food material such as liquid seasoning and solid seasoning. For example, the liquid seasoning such as sauce, baste, dipping sauce, mayonnaise, and dressing, the solid seasoning such as butter and jam, and food and drink such as salad, cooked rice with ingredients, bread, pizza, beverage, and confectionery can be manufactured. When the food product composition of the present invention is used as a part of them like the above, the blending proportion thereof is not limited, but the blending proportion is desired to be about 0.001 to 50% by mass based on the total food and drink or the total raw material or the food material such as liquid seasoning and solid seasoning. The food product composition may be used at any timing, but a method of adding the food product composition of the present invention is industrially convenient and thus preferred.

EXAMPLES

Hereinafter, the present invention will be described in further detail with reference to Examples, but these Examples are illustrative only for the purpose of the explanation, and the present invention is not limited to these Examples in any way.

[Preparation of food product composition sample]

Food product composition samples of Comparative Examples 1 to 5 and Test Examples 1 to 33 were prepared by using the materials shown in the following Table 2 to Table 13. Specifically, dried products of common wheat and sweetcorn which are one of grains; beet, carrot, pumpkin, kale, cabbage, sweet potato, paprika, and spinach which are one of vegetables; green soybean, green pea, and soybean which are one of beans; and grape and strawberry which are one of fruits were subjected to a drying treatment at least until the water activity values thereof became 0.95 or less. Not only the part typically used for drinking/eating (the part other than the non-edible part) was used as the edible part of each foodstuff, but also the core of sweetcorn, the skin of beet, the petiole base of carrot, the pumpkin seeds and pith, the petiole base of kale, the core of cabbage, both ends of sweet potato, the seed and stem end of paprika, the pod of green soybean, the pod of green pea, the stem end and stalk of strawberry, and the fruit peel and seed of grape were used as the non-edible part of some of the foodstuff. Each of the dried products were mixed with materials e.g., almond dice, raisin (as dried fruit), or quinoa puff as ingredients; sugars (e.g., sugar and date syrup); and fats/oils according to the compositions shown in Tables 2 to 13, and the mixtures were formed in a shape with 5 mm in thickness, 10 cm in length, and 3 cm in width. The shaped mixtures were baked at 110°C for 6 minutes, and then allowed to cool. Regarding the date syrup, it was concentrated by a kneader before mixing until the Brix changes from 72 to 80 to evaporate moisture, and then subjected to mixing above.

[Table 2]

| | | | | Unit | Comparative Example 1 | Comparative Example 2 | Comparative Example 3 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | | | |
| | | | [Edible part] dried sweetcorn + [non-edible part] dried sweetcorn (core) | g | | | 360 |
| | | | [Edible part] dried green soybean + [non-edible part] dried green soybean (pod) | g | | | |
| | | | [Edible part] dried paprika + [non-edible part] dried paprika (seed and stem end) | g | | | |
| | | | [Edible part] dried beet + [non-edible part] dried beet (peel) | g | | | |
| | | | [Edible part] dried green pea + [non-edible part] dried green pea (pod) | g | | | |

(continued)

| | | | | | Unit | Comparative Example 1 | Comparative Example 2 | Comparative Example 3 |
|---|---|---|---|---|---|---|---|---|
| | | | | [Edible part] dried grape + [non-edible part] dried grape (fruit peel and seed) | g | | | |
| | | | | [Edible part] dried spinach + [non-edible part] dried spinach (plant foot) | g | | | |
| | | | | [Edible part] dried tomato + [non-edible part] dried tomato (stem end) | g | | | |
| | | | | [Edible part] dried broccoli + [non-edible part] dried broccoli (leaf and stem) | g | | | |
| | | | | [Edible part] dried kale + [non-edible part] dried kale (petiole base) | g | | | |
| | | | | [Edible part] dried sweet potato + [non-edible part] dried sweet potato (both ends) | g | | | |
| | | | | [Edible part] dried cabbage + [non-edible part] dried cabbage (core) | g | | | |
| | | | | [Edible part] dried strawberry + [non-edible part] dried strawberry (stem end and stalk) | g | | | |
| | | | | [Edible part] dried soybean | g | | | |
| | | | | [Edible part] dried common wheat | g | 300 | 300 | |
| | | | | [Edible part] dried orange | g | | | |
| | | | | [Edible part] dried pineapple | g | | | |
| | | | Non-edible part/(edible part + non-edible part)% | | % by mass | 0 | 0 | 33 |

(continued)

| | | | Unit | Comparative Example 1 | Comparative Example 2 | Comparative Example 3 |
|---|---|---|---|---|---|---|
| | | Proportion of edible part and non-edible part each derived from the same type of foodstuff containing insoluble dietary fibers contained in the food product composition | % by mass | 0 | 0 | 36 |
| | Ingredient | Almond dice | g | | | 100 |
| | | Almond slice | g | 33 | 33 | 100 |
| | | Dried raisin | g | | | 100 |
| | | Dried date | g | | | |
| | | Dried mango | g | | | |
| | | Quinoa puff | g | | | |
| | Total content proportion of foodstuff containing insoluble dietary fibers | | % by mass | 33 | 33 | 66 |
| Binder | | Egg | g | 5 | | |
| | | Skim milk | g | 5 | | |
| Fat/oil | | Olive oil | g | 220 | 220 | 30 |
| | | Salad oil | g | | | |
| | | Sesame oil | g | | | |
| Sugars | | Starch syrup | g | | | |
| | | Sugar | g | 430 | 440 | |
| | | Date syrup | g | | | 300 |
| Others | | Salt | g | 7 | 7 | 5 |
| | | Kirsch | g | | | 5 |
| | | Water | g | | | |
| Total | | | g | 1000 | 1000 | 1000 |

[Table 3]

| | | | | Unit | Comparative Example 4 | Comparative Example 5 | Test Example 1 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | | | |
| | | | [Edible part] dried sweetcorn + [non-edible part] dried sweetcorn (core) | g | 360 | 45 | 360 |
| | | | [Edible part] dried green soybean + [non-edible part] dried green soybean (pod) | g | | | |
| | | | [Edible part] dried paprika + [non-edible part] dried paprika (seed and stem end) | g | | | |
| | | | [Edible part] dried beet + [non-edible part] dried beet (peel) | g | | | |
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |

(continued)

| | | | | Unit | Comparative Example 4 | Comparative Example 5 | Test Example 1 |
|---|---|---|---|---|---|---|---|
| | | | [Edible part] dried sweet potato + [non-edible part] dried sweet potato (both ends) | g | | | |
| | | | [Edible part] dried cabbage + [non-edible part] dried cabbage (core) | g | | | |
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 33 | 33 | 33 |
| | | Proportion of edible part and non-edible part each derived from the same type of foodstuff containing insoluble dietary fibers contained in the food product composition | | %by mass | 36 | 5 | 36 |
| | | Ingredient | Almond dice | g | 100 | 10 | 100 |
| | | | Almond slice | g | 100 | 10 | 100 |
| | | | Dried raisin | g | 100 | 10 | 100 |
| | | | Dried date | g | | | |
| | | | Dried mango | g | | | |
| | | | Quinoa puff | g | | | |
| | | Total content proportion of foodstuff containing insoluble dietary fibers | | % by mass | 66 | 8 | 66 |
| | Binder | | Egg | g | | | |
| | | | Skim milk | g | | | |

(continued)

|  |  |  | Unit | Comparative Example 4 | Comparative Example 5 | Test Example 1 |
|---|---|---|---|---|---|---|
| Fat/oil | Olive oil | g | 30 | 165 | 30 |
|  | Salad oil | g |  |  |  |
|  | Sesame oil | g |  |  |  |
| Sugars | Starch syrup | g |  |  |  |
|  | Sugar | g |  |  |  |
|  | Date syrup | g | 300 | 750 | 300 |
| Others | Salt | g | 5 | 5 | 5 |
|  | Kirsch | g | 5 | 5 | 5 |
|  | Water | g |  |  |  |
| Total |  | g | 1000 | 1000 | 1000 |

[Table 4]

| | | | | Unit | Test Example 2 | Test Example 3 | Test Example 4 |
|---|---|---|---|---|---|---|---|
| Recipe | Foodstuff containing insoluble | Powder | [Edible part] dried carrot + [non-edible part] dried carrot (petiole base) | g |  |  |  |
|  |  |  | [Edible part] dried pumpkin + [non-edible part] dried pumpkin (seed, pith) | g |  |  |  |
|  | dietary fibers |  | [Edible part] dried sweetcorn + [non-edible part] dried sweetcorn (core) | g | 300 | 180 | 90 |
|  |  |  | [Edible part] dried green soybean + [non-edible part] dried green soybean (pod) | g |  |  |  |
|  |  |  | [Edible part] dried paprika + [non-edible part] dried paprika (seed and stem end) | g |  |  |  |
|  |  |  | [Edible part] dried beet + [non-edible part] dried beet (peel) | g |  |  |  |
|  |  |  | [Edible part] dried green pea + [non-edible part] dried green pea (pod) | g |  |  |  |
|  |  |  | [Edible part] dried grape + [non-edible part] dried grape (fruit peel and seed) | g |  |  |  |

(continued)

| | | | | Unit | Test Example 2 | Test Example 3 | Test Example 4 |
|---|---|---|---|---|---|---|---|
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | Non-edible part/(edible part + non-edible part)% | | | % by mass | 33 | 33 | 33 |
| | Proportion of edible part and non-edible part each derived from the same type of foodstuff containing insoluble dietary fibers contained in the food product composition | | | % by mass | 30 | 18 | 9 |
| | Ingredient | | Almond dice | g | 100 | 10 | 10 |
| | | | Almond slice | g | 100 | 10 | 10 |
| | | | Dried raisin | g | 100 | 10 | 10 |
| | | | Dried date | g | | | |
| | | | Dried mango | g | | | |
| | | | Quinoa puff | g | | | |

(continued)

|  |  |  |  | Unit | Test Example 2 | Test Example 3 | Test Example 4 |
|---|---|---|---|---|---|---|---|
|  |  |  | Total content proportion of foodstuff containing insoluble dietary fibers | % by mass | 60 | 21 | 12 |
|  | Binder |  | Egg | g |  |  |  |
|  |  |  | Skim milk | g |  |  |  |
|  | Fat/oil |  | Olive oil | g | 30 | 80 | 170 |
|  |  |  | Salad oil | g |  |  |  |
|  |  |  | Sesame oil | g |  |  |  |
|  | Sugars |  | Starch syrup | g |  |  |  |
|  |  |  | Sugar | g |  |  |  |
|  |  |  | Date syrup | g | 300 | 700 | 700 |
|  | Others |  | Salt | g | 5 | 5 | 5 |
|  |  |  | Kirsch | g | 5 | 5 | 5 |
|  |  |  | Water | g |  |  |  |
|  | Total |  |  | g | 1000 | 1000 | 1000 |

[Table 5]

|  |  |  |  | Unit | Test Example 5 | Test Example 6 | Test Example 7 |
|---|---|---|---|---|---|---|---|
| Recipe | Foodstuff containing insoluble dietary fibers | Powder | [Edible part] dried carrot + [non-edible part] dried carrot (petiole base) | g |  |  |  |
|  |  |  | [Edible part] dried pumpkin + [non-edible part] dried pumpkin (seed, pith) | g |  |  |  |
|  |  |  | [Edible part] dried sweetcorn + [non-edible part] dried sweetcorn (core) | g |  |  | 150 |
|  |  |  | [Edible part] dried green soybean + [non-edible part] dried green soybean (pod) | g | 400 | 300 |  |
|  |  |  | [Edible part] dried paprika + [non-edible part] dried paprika (seed and stem end) | g |  |  |  |
|  |  |  | [Edible part] dried beet + [non-edible part] dried beet (peel) | g |  |  |  |

(continued)

| | | | | Unit | Test Example 5 | Test Example 6 | Test Example 7 |
|---|---|---|---|---|---|---|---|
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 25 | 40 | 75 |
| | | Proportion of edible part and non-edible part each derived from the same type of foodstuff containing insoluble dietary fibers contained in the food product composition | | % by mass | 40 | 30 | 15 |

**EP 3 785 547 A1**

(continued)

| | | | | | Unit | Test Example 5 | Test Example 6 | Test Example 7 |
|---|---|---|---|---|---|---|---|---|
| | | | Ingredient | Almond dice | g | 100 | 100 | 100 |
| | | | | Almond slice | g | 50 | 100 | 100 |
| | | | | Dried raisin | g | 50 | 100 | 142 |
| | | | | Dried date | g | | | |
| | | | | Dried mango | g | | | |
| | | | | Quinoa puff | g | | | |
| | | | Total content proportion of foodstuff containing insoluble dietary fibers | | % by mass | 60 | 60 | 49 |
| | Binder | | | Egg | g | | | |
| | | | | Skim milk | g | | | |
| | Fat/oil | | | Olive oil | g | 150 | 50 | |
| | | | | Salad oil | g | | | 50 |
| | | | | Sesame oil | g | | | |
| | Sugars | | | Starch syrup | g | | | |
| | | | | Sugar | g | | | 150 |
| | | | | Date syrup | g | 242 | 342 | 300 |
| | Others | | | Salt | g | 4 | 4 | 4 |
| | | | | Kirsch | g | 4 | 4 | 4 |
| | | | | Water | g | | | |
| | Total | | | | g | 1000 | 1000 | 1000 |

[Table 6]

| | | | | | Unit | Test Example 8 | Test Example 9 | Test Example 10 |
|---|---|---|---|---|---|---|---|---|
| Recipe | Foodstuff containing insoluble dietary fibers | Powder | [Edible part] dried carrot + [non-edible part] dried carrot (petiole base) | | g | 300 | | |
| | | | [Edible part] dried pumpkin + [non-edible part] dried pumpkin (seed, pith) | | g | | | |
| | | | [Edible part] dried sweetcorn + [non-edible part] dried sweetcorn (core) | | g | | | |
| | | | [Edible part] dried green soybean + [non-edible part] dried green soybean (pod) | | g | | | 360 |

(continued)

| | | | | Unit | Test Example 8 | Test Example 9 | Test Example 10 |
|---|---|---|---|---|---|---|---|
| | | | [Edible part] dried paprika + [non-edible part] dried paprika (seed and stem end) | g | | | |
| | | | [Edible part] dried beet + [non-edible part] dried beet (peel) | g | | 300 | |
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 8 | 4 | 60 |

(continued)

| | | | Unit | Test Example 8 | Test Example 9 | Test Example 10 |
|---|---|---|---|---|---|---|
| | | Proportion of edible part and non-edible part each derived from the same type of foodstuff containing insoluble dietary fibers contained in the food product composition | %by mass | 30 | 30 | 36 |
| | | Ingredient | Almond dice | g | 100 | 100 | 100 |
| | | | Almond slice | g | 100 | 100 | 100 |
| | | | Dried raisin | g | 100 | 100 | 200 |
| | | | Dried date | g | | | |
| | | | Dried mango | g | | | |
| | | | Quinoa puff | g | | | |
| | | Total content proportion of foodstuff containing insoluble dietary fibers | % by mass | 30 | 60 | 76 |
| Binder | | | Egg | g | | | |
| | | | Skim milk | g | | | |
| Fat/oil | | | Olive oil | g | | 100 | |
| | | | Salad oil | g | | | |
| | | | Sesame oil | g | 100 | | |
| Sugars | | | Starch syrup | g | | | |
| | | | Sugar | g | | | |
| | | | Date syrup | g | 292 | 292 | 230 |
| Others | | | Salt | g | 4 | 4 | 5 |
| | | | Kirsch | g | 4 | 4 | 5 |
| | | | Water | g | | | |
| Total | | | | g | 1000 | 1000 | 1000 |

[Table 7]

| | | | | Unit | Test Example 11 | Test Example 12 | Test Example 13 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | | | |
| | | | [Edible part] dried sweetcorn + [non-edible part] dried sweetcorn (core) | g | | | |
| | | | [Edible part] dried green soybean + [non-edible part] dried green soybean (pod) | g | 60 | 500 | |
| | | | [Edible part] dried paprika + [non-edible part] dried paprika (seed and stem end) | g | | | |
| | | | [Edible part] dried beet + [non-edible part] dried beet (peel) | g | | | 300 |
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |

(continued)

| | | | | Unit | Test Example 11 | Test Example 12 | Test Example 13 |
|---|---|---|---|---|---|---|---|
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 45 | 65 | 20 |
| | | Proportion of edible part and non-edible part each derived from the same type of foodstuff containing insoluble dietary fibers contained in the food product composition | | % by mass | 6 | 50 | 30 |
| | | Ingredient | Almond dice | g | 200 | 100 | 100 |
| | | | Almond slice | g | 140 | 100 | 100 |
| | | | Dried raisin | g | 100 | 100 | 100 |
| | | | Dried date | g | | | |
| | | | Dried mango | g | | | |
| | | | Quinoa puff | g | | | |
| | | Total content proportion of foodstuff containing insoluble dietary fibers | | % by mass | 50 | 80 | 60 |
| | Binder | | Egg | g | | | |
| | | | Skim milk | g | | | |
| | Fat/oil | | Olive oil | g | | | |
| | | | Salad oil | g | | | |
| | | | Sesame oil | g | | | |
| | Sugars | | Starch syrup | g | 100 | 192 | |
| | | | Sugar | g | 92 | | |
| | | | Date syrup | g | 300 | | 392 |
| | Others | | Salt | g | 4 | 4 | 4 |
| | | | Kirsch | g | 4 | 4 | 4 |
| | | | Water | g | | | |
| | Total | | | g | 1000 | 1000 | 1000 |

[Table 8]

|  |  |  |  | Unit | Test Example 14 | Test Example 15 | Test Example 16 |
|---|---|---|---|---|---|---|---|
| Recipe | Foodstuff containing insoluble dietary fibers | Powder | [Edible part] dried carrot + [non-edible part] dried carrot (petiole base) | g | 300 |  |  |
|  |  |  | [Edible part] dried pumpkin + [non-edible part] dried pumpkin (seed, pith) | g |  |  |  |
|  |  |  | [Edible part] dried sweetcorn + [non-edible part] dried sweetcorn (core) | g |  |  |  |
|  |  |  | [Edible part] dried green soybean + [non-edible part] dried green soybean (pod) | g |  |  | 300 |
|  |  |  | [Edible part] dried paprika + [non-edible part] dried paprika (seed and stem end) | g |  |  |  |
|  |  |  | [Edible part] dried beet + [non-edible part] dried beet (peel) | g |  | 300 |  |
|  |  |  | [Edible part] dried green pea + [non-edible part] dried green pea (pod) | g |  |  |  |
|  |  |  | [Edible part] dried grape + [non-edible part] dried grape (fruit peel and seed) | g |  |  |  |
|  |  |  | [Edible part] dried spinach + [non-edible part] dried spinach (plant foot) | g |  |  |  |
|  |  |  | [Edible part] dried tomato + [non-edible part] dried tomato (stem end) | g |  |  |  |
|  |  |  | [Edible part] dried broccoli + [non-edible part] dried broccoli (leaf and stem) | g |  |  |  |
|  |  |  | [Edible part] dried kale + [non-edible part] dried kale (petiole base) | g |  |  |  |
|  |  |  | [Edible part] dried sweet potato + [non-edible part] dried sweet potato (both ends) | g |  |  |  |
|  |  |  | [Edible part] dried cabbage + [non-edible part] dried cabbage (core) | g |  |  |  |

(continued)

| | | | Unit | Test Example 14 | Test Example 15 | Test Example 16 |
|---|---|---|---|---|---|---|
| | | [Edible part] dried strawberry + [non-edible part] dried strawberry (stem end and stalk) | g | | | |
| | | [Edible part] dried soybean | g | | | |
| | | [Edible part] dried common wheat | g | | | |
| | | [Edible part] dried orange | g | | | |
| | | [Edible part] dried pineapple | g | | | |
| | Non-edible part/(edible part + non-edible part)% | | % by mass | 15 | 25 | 50 |
| | Proportion of edible part and non-edible part each derived from the same type of foodstuff containing insoluble dietary fibers contained in the food product composition | | %by mass | 30 | 30 | 30 |
| | Ingredient | Almond dice | g | 100 | 50 | 100 |
| | | Almond slice | g | 100 | 100 | 100 |
| | | Dried raisin | g | 100 | 100 | 100 |
| | | Dried date | g | | | |
| | | Dried mango | g | | | |
| | | Quinoa puff | g | | | |
| | Total content proportion of foodstuff containing insoluble dietary fibers | | % by mass | 30 | 55 | 60 |
| Binder | | Egg | g | | | |
| | | Skim milk | g | | | |
| Fat/oil | | Olive oil | g | | | |
| | | Salad oil | g | | | |
| | | Sesame oil | g | | | |
| Sugars | | Starch syrup | g | | 142 | |
| | | Sugar | g | | | |
| | | Date syrup | g | 392 | 300 | 392 |
| Others | | Salt | g | 4 | 4 | 4 |
| | | Kirsch | g | 4 | 4 | 4 |
| | | Water | g | | | |
| Total | | | g | 1000 | 1000 | 1000 |

[Table 9]

| | | | | Unit | Test Example 17 | Test Example 18 | Test Example 19 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | | 300 | |
| | | | [Edible part] dried sweetcorn + [non-edible part] dried sweetcorn (core) | g | | | |
| | | | [Edible part] dried green soybean + [non-edible part] dried green soybean (pod) | g | | | |
| | | | [Edible part] dried paprika + [non-edible part] dried paprika (seed and stem end) | g | | | 250 |
| | | | [Edible part] dried beet + [non-edible part] dried beet (peel) | g | 300 | | |
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |

(continued)

| | | | Unit | Test Example 17 | Test Example 18 | Test Example 19 |
|---|---|---|---|---|---|---|
| | | [Edible part] dried strawberry + [non-edible part] dried strawberry (stem end and stalk) | g | | | |
| | | [Edible part] dried soybean | g | | | |
| | | [Edible part] dried common wheat | g | | | |
| | | [Edible part] dried orange | g | | | |
| | | [Edible part] dried pineapple | g | | | |
| | Non-edible part/(edible part + non-edible part)% | | % by mass | 40 | 30 | 10 |
| | Proportion of edible part and non-edible part each derived from the same type of foodstuff containing insoluble dietary fibers contained in the food product composition | | %by mass | 30 | 30 | 25 |
| | Ingredient | Almond dice | g | 100 | 100 | 100 |
| | | Almond slice | g | 100 | 100 | 100 |
| | | Dried raisin | g | 100 | 100 | 100 |
| | | Dried date | g | | | |
| | | Dried mango | g | | | |
| | | Quinoa puff | g | | | |
| | Total content proportion of foodstuff containing insoluble dietary fibers | | %by mass | 60 | 60 | 55 |
| Binder | | Egg | g | | | |
| | | Skim milk | g | | | |
| Fat/oil | | Olive oil | g | | | |
| | | Salad oil | g | | | |
| | | Sesame oil | g | | | |
| Sugars | | Starch syrup | g | | | |
| | | Sugar | g | | | |
| | | Date syrup | g | 392 | 392 | 427 |
| Others | | Salt | g | 4 | 4 | 4 |
| | | Kirsch | g | 4 | 4 | 4 |
| | | Water | g | | | 15 |
| Total | | | g | 1000 | 1000 | 1000 |

[Table 10]

| | | | | Unit | Test Example 20 | Test Example 21 | Test Example 22 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | | | |
| | | | [Edible part] dried sweetcorn + [non-edible part] dried sweetcorn (core) | g | | | |
| | | | [Edible part] dried green soybean + [non-edible part] dried green soybean (pod) | g | | | |
| | | | [Edible part] dried paprika + [non-edible part] dried paprika (seed and stem end) | g | | | |
| | | | [Edible part] dried beet + [non-edible part] dried beet (peel) | g | | | |
| | | | [Edible part] dried green pea + [non-edible part] dried green pea (pod) | g | 300 | | |
| | | | [Edible part] dried grape + [non-edible part] dried grape (fruit peel and seed) | g | | 300 | |
| | | | [Edible part] dried spinach + [non-edible part] dried spinach (plant foot) | g | | | 200 |
| | | | [Edible part] dried tomato + [non-edible part] dried tomato (stem end) | g | | | |
| | | | [Edible part] dried broccoli + [non-edible part] dried broccoli (leaf and stem) | g | | | |
| | | | [Edible part] dried kale + [non-edible part] dried kale (petiole base) | g | | | |
| | | | [Edible part] dried sweet potato + [non-edible part] dried sweet potato (both ends) | g | | | |
| | | | [Edible part] dried cabbage + [non-edible part] dried cabbage (core) | g | | | |

(continued)

| | | | | Unit | Test Example 20 | Test Example 21 | Test Example 22 |
|---|---|---|---|---|---|---|---|
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 45 | 15 | 2 |
| | | Proportion of edible part and non-edible part each derived from the same type of foodstuff containing insoluble dietary fibers contained in the food product composition | | %by mass | 30 | 30 | 20 |
| | | Ingredient | Almond dice | g | 100 | 100 | 10 |
| | | | Almond slice | g | 100 | 100 | 20 |
| | | | Dried raisin | g | 100 | 100 | 10 |
| | | | Dried date | g | | | |
| | | | Dried mango | g | | | |
| | | | Quinoa puff | g | | | |
| | | Total content proportion of foodstuff containing insoluble dietary fibers | | % by mass | 60 | 60 | 24 |
| | Binder | | Egg | g | | | |
| | | | Skim milk | g | | | |
| | Fat/oil | | Olive oil | g | | | 150 |
| | | | Salad oil | g | | | 120 |
| | | | Sesame oil | g | | | |
| | Sugars | | Starch syrup | g | | | 282 |
| | | | Sugar | g | | | |
| | | | Date syrup | g | 392 | 392 | 200 |
| | Others | | Salt | g | 4 | 4 | 4 |
| | | | Kirsch | g | 4 | 4 | 4 |
| | | | Water | g | | | |
| | Total | | | g | 1000 | 1000 | 1000 |

[Table 11]

| | | | | Unit | Test Example 23 | Test Example 24 | Test Example 25 |
|---|---|---|---|---|---|---|---|
| Recipe | Foodstuff containing insoluble dietary fibers | Powder | [Edible part] dried carrot + [non-edible part] dried carrot (petiole base) | g | | | |
| | | | [Edible part] dried pumpkin + [non-edible part] dried pumpkin (seed, pith) | g | 150 | | |
| | | | [Edible part] dried sweetcorn + [non-edible part] dried sweetcorn (core) | g | 150 | | |
| | | | [Edible part] dried green soybean + [non-edible part] dried green soybean (pod) | g | | | |
| | | | [Edible part] dried paprika + [non-edible part] dried paprika (seed and stem end) | g | | | |
| | | | [Edible part] dried beet + [non-edible part] dried beet (peel) | g | | | |
| | | | [Edible part] dried green pea + [non-edible part] dried green pea (pod) | g | | | |
| | | | [Edible part] dried grape + [non-edible part] dried grape (fruit peel and seed) | g | | | |
| | | | [Edible part] dried spinach + [non-edible part] dried spinach (plant foot) | g | | | |
| | | | [Edible part] dried tomato + [non-edible part] dried tomato (stem end) | g | | 100 | |
| | | | [Edible part] dried broccoli + [non-edible part] dried broccoli (leaf and stem) | g | | | 200 |
| | | | [Edible part] dried kale + [non-edible part] dried kale (petiole base) | g | | | |

(continued)

| | | | | Unit | Test Example 23 | Test Example 24 | Test Example 25 |
|---|---|---|---|---|---|---|---|
| | | | [Edible part] dried sweet potato + [non-edible part] dried sweet potato (both ends) | g | | | |
| | | | [Edible part] dried cabbage + [non-edible part] dried cabbage (core) | g | | | |
| | | | [Edible part] dried strawberry + [non-edible part] dried strawberry (stem end and stalk) | g | | | |
| | | | [Edible part] dried soybean | g | | | |
| | | | [Edible part] dried common wheat | g | | | |
| | | | [Edible part] dried orange | g | | | |
| | | | [Edible part] dried pineapple | g | | | |
| | | Non-edible part/(edible part + non-edible part)% | | % by mass | 60 (corn 70% by mass, pumpkin 50% by mass) | 5 | 50 |
| | | Proportion of edible part and non-edible part each derived from the same type of foodstuff containing insoluble dietary fibers contained in the food product composition | | % by mass | 30 | 10 | 20 |
| | | Ingredient | Almond dice | g | 100 | 150 | 100 |
| | | | Almond slice | g | 100 | 150 | 100 |
| | | | Dried raisin | g | 100 | 150 | 100 |
| | | | Dried date | g | | | |
| | | | Dried mango | g | | | |
| | | | Quinoa puff | g | | | |
| | | Total content proportion of foodstuff containing insoluble dietary fibers | | % by mass | 60 | 55 | 50 |
| | Binder | | Egg | g | | | |
| | | | Skim milk | g | | | |
| | Fat/oil | | Olive oil | g | 30 | 200 | 100 |
| | | | Salad oil | g | | | |
| | | | Sesame oil | g | | | |

(continued)

|  |  |  | Unit | Test Example 23 | Test Example 24 | Test Example 25 |
|---|---|---|---|---|---|---|
| Sugars | | Starch syrup | g | 100 | | |
| | | Sugar | g | 100 | | |
| | | Date syrup | g | 162 | 250 | 400 |
| Others | | Salt | g | 4 | | |
| | | Kirsch | g | 4 | | |
| | | Water | g | | | |
| Total | | | g | 1000 | 1000 | 1000 |

[Table 12]

| | | | | Unit | Test Example 26 | Test Example 27 | Test Example 28 | Test Example 29 |
|---|---|---|---|---|---|---|---|---|
| Recipe | Foodstuff containing insoluble dietary fibers | Powder | [Edible part] dried carrot + [non-edible part] dried carrot (petiole base) | g | | | | |
| | | | [Edible part] dried pumpkin + [non-edible part] dried pumpkin (seed, pith) | g | | | | |
| | | | [Edible part] dried sweetcorn + [non-edible part] dried sweetcorn (core) | g | | | | |
| | | | [Edible part] dried green soybean + [non-edible part] dried green soybean (pod) | g | | | | |
| | | | [Edible part] dried paprika + [non-edible part] dried paprika (seed and stem end) | g | | | | |

(continued)

| | | | | | Unit | Test Example 26 | Test Example 27 | Test Example 28 | Test Example 29 |
|---|---|---|---|---|---|---|---|---|---|
| | | | | [Edible part] dried beet + [non-edible part] dried beet (peel) | g | | | | |
| | | | | [Edible part] dried green pea + [non-edible part] dried green pea (pod) | g | | | | |
| | | | | [Edible part] dried grape + [non-edible part] dried grape (fruit peel and seed) | g | | | | |
| | | | | [Edible part] dried spinach + [non-edible part] dried spinach (plant foot) | g | | | | |
| | | | | [Edible part] dried tomato + [non-edible part] dried tomato (stem end) | g | | | | |
| | | | | [Edible part] dried broccoli + [non-edible part] dried broccoli (leaf and stem) | g | | | | |
| | | | | [Edible part] dried kale + [non-edible part] dried kale (petiole base) | g | 300 | | | |
| | | | | [Edible part] dried sweet potato + [non-edible part] dried sweet potato (both ends) | g | | 400 | | |

(continued)

| | | | | Unit | Test Example 26 | Test Example 27 | Test Example 28 | Test Example 29 |
|---|---|---|---|---|---|---|---|---|
| | | | [Edible part] dried cabbage + [non-edible part] dried cabbage (core) | g | | | 250 | |
| | | | [Edible part] dried strawberry + [non-edible part] dried strawberry (stem end and stalk) | g | | | 250 | 600 |
| | | | [Edible part] dried soybean | g | | | | |
| | | | [Edible part] dried common wheat | g | | | | |
| | | | [Edible part] dried orange | g | | | | |
| | | | [Edible part] dried pineapple | g | | | | |
| | | Non-edible part/(edible part + non-edible part)% | | % by mass | 10 | 4 | 11 (cabbage 20% by mass, strawberry 2% by mass) | 2 |
| | | Proportion of edible part and non-edible part each derived from the same type of foodstuff containing insoluble dietary fibers contained in the food product composition | | % by mass | 30 | 40 | 50 | 60 |
| | | Ingredient | Almond dice | g | 80 | 60 | 40 | |
| | | | Almond slice | g | 80 | 60 | 40 | |
| | | | Dried raisin | g | 80 | 60 | 40 | |
| | | | Dried date | g | | | | |
| | | | Dried mango | g | | | | |
| | | | Quinoa puff | g | | | | |
| | | Total content proportion of foodstuff containing insoluble dietary fibers | | % by mass | 54 | 58 | 62 | 60 |

(continued)

|  |  |  | Unit | Test Example 26 | Test Example 27 | Test Example 28 | Test Example 29 |
|---|---|---|---|---|---|---|---|
|  | Binder | Egg | g |  |  |  |  |
|  |  | Skim milk | g |  |  |  |  |
|  | Fat/oil | Olive oil | g | 80 | 60 | 40 | 10 |
|  |  | Salad oil | g |  |  |  |  |
|  |  | Sesame oil | g |  |  |  |  |
|  | Sugars | Starch syrup | g |  |  |  |  |
|  |  | Sugar | g |  |  |  |  |
|  |  | Date syrup | g | 380 | 360 | 310 | 250 |
|  | Others | Salt | g |  |  |  |  |
|  |  | Kirsch | g |  |  |  |  |
|  |  | Water | g |  |  | 30 | 140 |
|  | Total |  | g | 1000 | 1000 | 1000 | 1000 |

[Table 13]

| | | | | Unit | Test Example 30 | Test Example 31 | Test Example 32 | Test Example 33 | Test Example 34 |
|---|---|---|---|---|---|---|---|---|---|
| Recipe | Foodstuff containing insoluble dietary fibers | Powder | [Edible part] dried carrot + [non-edible part] dried carrot (petiole base) | g | | | | | |
| | | | [Edible part] dried pumpkin + [non-edible part] dried pumpkin (seed, pith) | g | | | | | |
| | | | [Edible part] dried sweetcorn + [non-edible part] dried sweetcorn (core) | g | | | | 280 | |
| | | | [Edible part] dried green soybean + [non-edible part] dried green soybean (pod) | g | | | | | |
| | | | [Edible part] dried paprika + [non-edible part] dried paprika (seed and stem end) | g | | | | | |
| | | | [Edible part] dried beet + [non-edible part] dried beet (peel) | g | | | 280 | | 200 |
| | | | [Edible part] dried green pea + [non-edible part] dried green pea (pod) | g | | | | | |
| | | | [Edible part] dried grape + [non-edible part] dried grape (fruit peel and seed) | g | | | | | |
| | | | [Edible part] dried spinach + [non-edible part] dried spinach (plant foot) | g | | | | | |
| | | | [Edible part] dried tomato + [non-edible part] dried tomato (stem end) | g | | | | | |
| | | | [Edible part] dried broccoli + [non-edible part] dried broccoli (leaf and stem) | g | | | | | |

EP 3 785 547 A1

42

(continued)

| | | | | Unit | Test Example 30 | Test Example 31 | Test Example 32 | Test Example 33 | Test Example 34 |
|---|---|---|---|---|---|---|---|---|---|
| | | | [Edible part] dried kale + [non-edible part] dried kale (petiole base) | g | | | | | |
| | | | [Edible part] dried sweet potato + [non-edible part] dried sweet potato (both ends) | g | | | | | |
| | | | [Edible part] dried cabbage + [non-edible part] dried cabbage (core) | g | | | | | |
| | | | [Edible part] dried strawberry + [non-edible part] dried strawberry (stem end and stalk) | g | | | | | |
| | | | [Edible part] dried soybean | g | 346 | 300 | | | |
| | | | [Edible part] dried common wheat | g | | | | | |
| | | | [Edible part] dried orange | g | | | | 140 | |
| | | | [Edible part] dried pineapple | g | | | | | 100 |
| | | Non-edible part/(edible part + non-edible part)% | | % by mass | 0 | 0 | 3 | 24 | 3 |
| | | Proportion of edible part and non-edible part each derived from the same type of foodstuff containing insoluble dietary fibers contained in the food product composition | | % by mass | 0 | 0 | 35 | 30 | 20 |
| | | Ingredient | Almond dice | g | 100 | 100 | 100 | 75 | |
| | | | Almond slice | g | | | | | |
| | | | Tomato chip | g | | | | | 98 |
| | | | Dried raisin | g | | | | 80 | |
| | | | Dried date | g | | | | 220 | 220 |
| | | | Dried mango | g | | | | | 130 |
| | | | Quinoa puff | g | | | | 95 | 120 | 212 |

(continued)

| | | | Unit | Test Example 30 | Test Example 31 | Test Example 32 | Test Example 33 | Test Example 34 |
|---|---|---|---|---|---|---|---|---|
| | | Total content proportion of foodstuff containing insoluble dietary fibers | % by mass | 45 | 40 | 92 | 93 | 59 |
| Binder | | Egg | g | 5 | 5 | | | |
| | | Skim milk | g | 3 | | | | |
| Fat/oil | | Olive oil | g | 250 | 220 | 50 | 50 | |
| | | Salad oil | g | | | | | |
| | | Cocoa butter | g | | | | | 285 |
| | | Sesame oil | g | | | | | |
| Sugars | | Starch syrup | g | | | | | |
| | | Sugar | g | 292 | 371 | | | |
| | | White grape juice (Brix 90°) | g | | | | | 200 |
| | | Date syrup | g | | | | | |
| Others | | Salt | g | 4 | 4 | 5 | 5 | 2 |
| | | Kirsch | g | | | | | |
| | | Water | g | | | 30 | 20 | |
| Total | | | g | 1000 | 1000 | 1000 | 1000 | 1000 |

[Measurement of particle diameter distribution of each food product composition sample]

Blocks of about 1 cm square obtained from each food product composition sample was immersed in a 50 ml of hot water at about 80°C and the mixtures were allowed to stand for about 5 minutes, and thereafter, stirred thoroughly with a spatula, suspended in hot water, and passed through a 7.5-mesh sieve having an opening of 2.36 mm and a wire diameter of 1.0 mm according to the new JIS to obtain solutions, and these solutions were used as the samples for particle diameter distribution measurement.

Microtrac MT3300 EX2 system of MicrotracBEL Corp. was used as a laser diffraction particle diameter distribution measuring apparatus and the particle diameter distribution of each food product composition sample was measured. DMSII (Data Management System version 2, MicrotracBEL Corp.) was used as a measurement application software. In the measurement, distilled water was used as the solvent for the measurement, and the cleaning button of the measurement application software was pressed to conduct cleaning, and then the Set zero button of the software was pressed to conduct zero adjustment, and the sample was directly charged until the concentration becomes within an appropriate concentration range by sample loading.

For the measurement of the sample before ultrasonication not to be subjected to agitation, the sample concentration was adjusted within an optimal range in two times of sample loading after charging the sample, and immediately after the adjustment, a laser diffraction measurement was performed at a flow velocity of 60% and at a measurement time of 10 seconds, and the result was determined as a measurement value. Meanwhile, for the measurement of the sample after ultrasonication being subjected to agitation, the sample concentration was adjusted within the appropriate range by sample loading after charging the sample, the ultrasonication button of the software was pressed to apply an ultrasonic wave having a frequency of 40 kHz with an output of 40 W for 3 minutes. After a degassing was performed three times, the sample loading process was performed again. After it was confirmed that the sample concentration was still within the optimal range, a laser diffraction measurement is performed at a flow velocity of 60% and at a measurement time of 10 seconds, and the result was determined as a measurement value. For the measurement conditions, distribution display: volume, refractive index of particle: 1.60, refractive index of solvent: 1.333, measuring upper limit ($\mu$m) = 2,000.00 $\mu$m, and measuring lower limit ($\mu$m) = 0.021 $\mu$m were used.

When each particle diameter distribution of the sample for each channel was measured, the measurement was performed using the particle diameter for each measurement channel described in the following Table 14 as the standard. The % particle frequency for each channel was determined by measuring the frequency of particles whose particle diameter is not more than the particle diameter defined for each channel and larger than the particle diameter defined for the channel having one higher number (in the largest channel within the measuring range, a particle diameter at the measuring lower limit) for each channel, and using the total frequency of all channels within the measuring range as a denominator. Specifically, the % particle frequency for each of the 132 channels below was measured. From the results obtained, the particle diameter of the channel having the largest particle diameter was defined as the maximum particle diameter, the particle diameter of the channel having the smallest particle diameter was defined as the minimum particle diameter, the particle diameter of the channel having the largest % particle frequency was defined as a modal particle diameter, and the particle diameter of the channel having the second-largest % particle frequency was defined as a second modal diameter. Note that when the modal particle diameter was determined, there was no channel having the same particle frequency.

[Table 14]

| Channel | Particle diameter ($\mu$m) | Channel | Particle diameter ($\mu$m) | Channel | Particle diameter ($\mu$m) | Channel | Particle diameter ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |

(continued)

| Channel | Particle diameter ($\mu$m) | Channel | Particle diameter ($\mu$m) | Channel | Particle diameter ($\mu$m) | Channel | Particle diameter ($\mu$m) |
|---|---|---|---|---|---|---|---|
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

[Sensory evaluation of food product composition sample]

Food product composition samples of Comparative Examples 1 to 5 and Test Examples 1 to 33 obtained in the above procedure were subjected to sensory evaluations by the following procedure.

First, training for distinguishing the taste, texture, and appearance of food products was conducted in advance for sensory test panelists who perform each sensory test. Among them, panelists who have particularly excellent results in the training, product development experience, and a wide variety of knowledge about the quality of food products such as the taste, texture, and appearance, and can perform an absolute evaluation on each sensory evaluation item, were selected.

Next, sensory tests to evaluate the quality thereof were performed with respect to the food product composition samples of Test Examples and Comparative Examples by a total of ten trained sensory test panelists selected by the above procedures. In these sensory tests, each of the items: "scattering", "firmness of dough", "texture of dough", and "fragility during storage" was evaluated on a scale up to 5 according to the following criteria.

"Scattering"

Samples were vigorously broken in the center of a circular paper with a radius of 8 cm, and the degree and the amount of powders and ingredients scattered to the outside of the circle were evaluated on the following 5-point scale by eye.

5: very good and preferred because there is no scattering outside the circle and no amount of scattering.
4: good because only a few were scattered to the outside of the circle and there is a very little amount of scattering.
3: fair and within the acceptable range because scattering to the outside of the circle is not outstanding and there is a little amount of scattering.
2: poor and outside the acceptable range because scattering to the outside of the circle is outstanding and there is a lot of amount of scattering.
1: very poor and hardly acceptable because scattering to the outside of the circle is significantly outstanding and there is significantly a lot of amount of scattering.

"Firmness of dough"

Samples were tasted and evaluated on the following 5-point scale.

5: the dough is clearly firm.
4: the dough is firm.
3: the dough is slightly firm and within the acceptable range.
2: the dough is not firm and outside the acceptable range.
1: the dough is not firm at all and hardly acceptable.

"Texture of dough"

Samples were tasted and evaluated on the following 5-point scale.

5: soft and airy texture.
4: slightly soft and airy texture.
3: slightly soft and little airy texture, within the acceptable range.
2: hard and crumbly texture, outside the acceptable range.
1: very hard and crumbly texture, outside the acceptable range.

"Fragility during storage"

Samples, which were packaged in a polyethylene film and allowed to stand at 20°C for 3 months with an incubator, were evaluated on the following 5-point scale by eye.

5: no crazing and cracking were found.
4: almost no crazing and cracking were found.
3: minor crazing and cracking were found but in the acceptable range.
2: crazing and cracking were found and outside the acceptable range.
1: many crazing and cracking were found and outside the acceptable range.

For every evaluation item, the evaluation of the standard sample was performed by all panelists in advance and the evaluation criteria for each score were standardized, and then the objective sensory test was performed by a total of ten panelists. The evaluation of each evaluation item was evaluated by a method, in which each panelist selects any one number closest to the evaluation by the panelist from the 5-point scale for each item. The evaluation results were summarized by calculating the arithmetic mean value from the scores of a total of ten panelists. Furthermore, the standard deviation was calculated to evaluate variations among panelists and it was confirmed that the variations were within a predetermined range.

[Analysis and evaluation result of food product composition sample]

Physical properties such as the particle diameter distribution and evaluation results of the sensory tests for the food product composition samples of Comparative Examples 1 to 5 and Test Examples 1 to 33 are shown in the following Table 15 to 19.

[Table 15]

| | | Unit | Comparative Example 1 | Comparative Example 2 | Comparative Example 3 | Comparative Example 4 | Comparative Example 5 | Test Example 1 | Test Example 2 | Test Example 3 | Test Example 4 |
|---|---|---|---|---|---|---|---|---|---|---|---|
| Measurement value | Sugar content | % by mass | 67.4 | 68.2 | 53.9 | 53.9 | 70.6 | 53.9 | 51.0 | 72.6 | 68.3 |
| | Moisture content | % by mass | 1.4 | 1.4 | 6.7 | 6.7 | 7.9 | 6.7 | 6.3 | 8.2 | 7.7 |
| | Total fat/oil content | % by mass | 32.9 | 32.7 | 14.6 | 14.6 | 17.7 | 14.6 | 14.4 | 9.7 | 18.4 |
| | Content of insoluble dietary fibers | % by mass | 1.3 | 1.3 | 6.9 | 6.9 | 0.8 | 6.9 | 6.2 | 2.5 | 1.4 |
| Before ultrasonication | Modal diameter | μm | 44.0 | 44.0 | 12.0 | 1086.0 | 40.4 | 48.0 | 26.2 | 44.0 | 40.4 |
| | Second modal diameter | μm | 176.0 | 209.3 | - | 383.9 | 322.8 | 296.0 | - | 271.4 | 296.0 |
| | Modal diameter/ second modal diameter | | 0.3 | 0.2 | - | 2.8 | 0.1 | 0.2 | - | 0.2 | 0.1 |
| After ultrasonication | Modal diameter | μm | 44.0 | 44.0 | 8.5 | 271.4 | 26.2 | 28.5 | 28.5 | 31.1 | 31.1 |
| | Maximum particle diameter | μm | 248.9 | 248.9 | 248.9 | 497.8 | 322.8 | 352.0 | 296.0 | 383.9 | 352.0 |
| | d90 | μm | 72.4 | 73.2 | 49.8 | 1001.4 | 85.6 | 53.9 | 95.4 | 80.0 | 80.9 |

| | | Unit | Comparative Example 1 | Comparative Example 2 | Comparative Example 3 | Comparative Example 4 | Comparative Example 5 | Test Example 1 | Test Example 2 | Test Example 3 | Test Example 4 |
|---|---|---|---|---|---|---|---|---|---|---|---|
| | d50 | μm | 39.1 | 39.9 | 11.9 | 290.4 | 28.2 | 21.1 | 27.8 | 18.2 | 22.5 |
| | d15 | μm | 17.9 | 18.0 | 4.6 | 61.2 | 6.3 | 5.8 | 12.1 | 4.7 | 5.9 |
| | Minimum particle diameter | μm | 4.2 | 4.2 | 1.5 | 7.1 | 2.1 | 1.3 | 3.0 | 1.3 | 1.5 |
| | Cumulative frequency of 100 μm or more (A) | % | 4.0 | 4.0 | 3.2 | 76.4 | 20.1 | 10.0 | 9.9 | 10.2 | 15.2 |
| | Cumulative frequency of 4 μm or less (B) | % | 0.0 | 0.0 | 10.3 | 0.0 | 4.9 | 5.0 | 1.0 | 2.1 | 3.1 |
| | A/B | | - | - | 0.3 | - | 4.1 | 2.0 | 9.8 | 4.8 | 4.8 |
| | d15/Minimum particle diameter | | 4.2 | 4.2 | 3.1 | 8.6 | 3.0 | 4.6 | 4.0 | 3.7 | 3.9 |
| | Maximum particle diameter/d90 | | 3.4 | 3.4 | 5.0 | 0.5 | 3.8 | 6.5 | 3.1 | 4.8 | 4.3 |
| | Modal diameter/ minimum particle diameter | | 10.4 | 10.4 | 5.7 | 38.0 | 12.3 | 22.6 | 9.5 | 24.7 | 20.8 |
| Sensory test | Scattering | | 1 | 1 | 2 | 1 | 2 | 3 | 3 | 3 | 3 |
| | Firmness of dough | | 4 | 2 | 2 | 1 | 3 | 3 | 3 | 3 | 3 |
| | Texture of dough | | 1 | 2 | 3 | 4 | 4 | 4 | 3 | 4 | 4 |

| | Unit | Comparative Example 1 | Comparative Example 2 | Comparative Example 3 | Comparative Example 4 | Comparative Example 5 | Test Example 1 | Test Example 2 | Test Example 3 | Test Example 4 |
|---|---|---|---|---|---|---|---|---|---|---|
| Fragility during storage | | 3 | 1 | 1 | 1 | 5 | 3 | 5 | 5 | 5 |

[Table 16]

|  | | Unit | Test Example 5 | Test Example 6 | Test Example 7 | Test Example 8 | Test Example 9 | Test Example 10 | Test Example 11 | Test Example 12 |
|---|---|---|---|---|---|---|---|---|---|---|
| Measurement value | Sugar content | % by mass | 26.9 | 40.4 | 62.4 | 52.1 | 53.9 | 38.8 | 54.1 | 24.0 |
| | Moisture content | % by mass | 5.0 | 6.1 | 5.6 | 5.6 | 6.2 | 5.6 | 7.0 | 6.4 |
| | Total fat/oil content | % by mass | 29.8 | 20.8 | 15.8 | 20.4 | 20.4 | 16.9 | 18.5 | 19.5 |
| | Content of insoluble dietary fibers | % by mass | 8.5 | 7.5 | 4.5 | 9.8 | 8.7 | 9.0 | 4.9 | 10.9 |
| Before ultrasonication | Modal diameter | $\mu$m | 52.3 | 57.1 | 67.9 | 57.1 | 44.0 | 248.9 | 296.0 | 248.9 |
| | Second modal diameter | $\mu$m | 271.4 | 542.9 | 271.4 | - | 322.8 | 52.3 | 52.3 | 67.9 |
| | Modal diameter/second modal diameter | | 0.2 | 0.1 | 0.3 | - | 0.1 | 4.8 | 5.7 | 3.7 |
| After ultrasonication | Modal diameter | $\mu$m | 31.1 | 31.1 | 228.2 | 62.2 | 48.0 | 296.0 | 271.4 | 114.1 |
| | Maximum particle diameter | $\mu$m | 995.6 | 1674.0 | 704.0 | 497.8 | 704.0 | 704.0 | 837.2 | 704.0 |

(continued)

| | | Unit | Test Example 5 | Test Example 6 | Test Example 7 | Test Example 8 | Test Example 9 | Test Example 10 | Test Example 11 | Test Example 12 |
|---|---|---|---|---|---|---|---|---|---|---|
| | d90 | $\mu$m | 235.6 | 581.9 | 286.8 | 147.5 | 193.6 | 333.9 | 359.5 | 252.9 |
| | d50 | $\mu$m | 28.9 | 36.2 | 77.6 | 47.3 | 35.4 | 97.4 | 105.0 | 46.8 |
| | d15 | $\mu$m | 7.4 | 9.2 | 9.3 | 10.2 | 7.0 | 15.5 | 18.0 | 6.5 |
| | Minimum particle diameter | $\mu$m | 1.3 | 1.3 | 1.1 | 1.3 | 1.3 | 1.3 | 1.3 | 1.3 |
| | Cumulative frequency of 100 $\mu$m or more (A) | % | 18.0 | 28.0 | 43.0 | 20.0 | 21.0 | 50.0 | 32.0 | 68.0 |
| | Cumulative frequency of 4 $\mu$m or less (B) | % | 8.0 | 6.0 | 7.5 | 6.0 | 8.0 | 5.5 | 5.0 | 8.5 |
| | A/B | | 2.3 | 4.7 | 5.7 | 3.3 | 2.6 | 9.1 | 6.4 | 8.0 |
| | d15/Minimum particle diameter | | 5.8 | 7.3 | 8.8 | 8.1 | 5.5 | 12.3 | 14.3 | 5.2 |
| | Maximum particle diameter/d90 | | 4.2 | 2.9 | 2.5 | 3.4 | 3.6 | 2.1 | 2.3 | 2.8 |
| | Modal diameter/minimum particle diameter | | 24.7 | 24.7 | 215.3 | 49.3 | 38.0 | 234.7 | 215.2 | 90.5 |
| Sensory test | Scattering | | 4 | 5 | 5 | 5 | 5 | 5 | 5 | 5 |
| | Firmness of dough | | 3 | 4 | 5 | 4 | 4 | 5 | 5 | 5 |
| | Texture of dough | | 5 | 5 | 5 | 5 | 5 | 5 | 5 | 5 |
| | Fragility during storage | | 3 | 5 | 5 | 3 | 3 | 5 | 5 | 5 |

[Table 17]

| | | Unit | Test Example 13 | Test Example 14 | Test Example 15 | Test Example 16 | Test Example 17 | Test Example 18 | Test Example 19 | Test Example 20 |
|---|---|---|---|---|---|---|---|---|---|---|
| Measurement value | Sugar content | % by mass | 62.9 | 61.1 | 65.0 | 44.9 | 62.9 | 54.5 | 62.2 | 44.9 |
| | Moisture content | % by mass | 7.2 | 6.6 | 8.2 | 6.6 | 7.2 | 6.9 | 8.5 | 6.9 |
| | Total fat/oil content | % by mass | 10.4 | 10.4 | 7.8 | 15.8 | 10.4 | 10.4 | 10.3 | 15.8 |
| | Content of insoluble dietary fibers | % by mass | 8.7 | 9.8 | 8.2 | 7.5 | 8.7 | 8.1 | 6.7 | 11.8 |
| Before ultrasonication | Modal diameter | μm | 271.4 | 271.4 | 542.9 | 271.4 | 418.6 | 176.0 | 296.0 | 322.8 |
| | Second modal diameter | μm | 913.0 | 913.0 | 322.8 | 80.7 | - | - | - | - |
| | Modal diameter/second modal diameter | | 0.3 | 0.3 | 1.7 | 3.4 | - | - | - | - |
| After ultrasonication | Modal diameter | μm | 322.8 | 271.4 | 271.4 | 104.7 | 456.5 | 248.9 | 228.2 | 248.9 |
| | Maximum particle diameter | μm | 2000.0 | 2000.0 | 2000.0 | 2000.0 | 1408.0 | 704.0 | 1674.0 | 1674.0 |
| | d90 | μm | 815.3 | 856.7 | 585.0 | 559.8 | 600.6 | 294.2 | 616.4 | 499.6 |
| | d50 | μm | 219.7 | 215.8 | 162.2 | 63.4 | 182.7 | 97.4 | 182.0 | 151.4 |

| | | Unit | Test Example 13 | Test Example 14 | Test Example 15 | Test Example 16 | Test Example 17 | Test Example 18 | Test Example 19 | Test Example 20 |
|---|---|---|---|---|---|---|---|---|---|---|
| | d15 | μm | 30.0 | 39.9 | 21.4 | 7.7 | 23.3 | 18.3 | 40.2 | 23.2 |
| | Minimum particle diameter | μm | 1.5 | 1.8 | 1.5 | 1.3 | 1.5 | 1.5 | 2.1 | 1.8 |
| | Cumulative frequency of 100 μm or more (A) | % | 30.0 | 29.0 | 38.0 | 40.0 | 65.0 | 49.0 | 67.4 | 62.5 |
| | Cumulative frequency of 4 μm or less (B) | % | 3.6 | 2.8 | 3.3 | 7.3 | 3.5 | 3.8 | 1.6 | 2.9 |
| | A/B | | 8.3 | 10.4 | 11.5 | 5.5 | 18.6 | 12.9 | 41.6 | 21.8 |
| | d15/Minimum particle diameter | | 20.0 | 22.4 | 14.3 | 6.1 | 15.5 | 12.2 | 19.1 | 13.0 |
| | Maximum particle diameter/d90 | | 2.5 | 2.3 | 3.4 | 3.6 | 2.3 | 2.4 | 2.7 | 3.4 |
| | Modal diameter/ minimum particle diameter | | 215.3 | 152.2 | 181.1 | 83.0 | 304.5 | 166.0 | 108.7 | 139.6 |
| Sensory test | Scattering | | 5 | 5 | 5 | 5 | 5 | 5 | 5 | 5 |
| | Firmness of dough | | 5 | 4 | 5 | 5 | 5 | 5 | 4 | 5 |
| | Texture of dough | | 5 | 5 | 5 | 5 | 5 | 5 | 5 | 5 |
| | Fragility during storage | | 5 | 5 | 5 | 5 | 5 | 5 | 5 | 5 |

[Table 18]

| | | Unit | Test Example 21 | Test Example 22 | Test Example 23 | Test Example 24 | Test Example 25 | Test Example 26 | Test Example 27 |
|---|---|---|---|---|---|---|---|---|---|
| Measurement value | Sugar content | % by mass | 67.1 | 40.9 | 53.7 | 41.8 | 48.2 | 45.4 | 71.4 |
| | Moisture content | % by mass | 6.9 | 7.4 | 6.3 | 5.3 | 6.5 | 6.5 | 6.5 |
| | Total fat/oil content | % by mass | 10.2 | 28.5 | 13.9 | 35.5 | 21.1 | 17.3 | 12.7 |
| | Content of insoluble dietary fibers | % by mass | 5.0 | 7.3 | 7.1 | 5.3 | 10.1 | 12.7 | 4.5 |
| Before ultrasonication | Modal diameter | μm | 352.0 | 67.9 | 124.5 | 271.4 | 296.0 | 96.0 | 352.0 |
| | Second modal diameter | μm | - | - | 161.4 | 44.0 | - | - | - |
| | Modal diameter/second modal diameter | | - | - | 0.8 | 6.2 | - | - | - |
| After ultrasonication | Modal diameter | μm | 248.9 | 33.9 | 228.2 | 191.9 | 352.0 | 74.0 | 271.4 |
| | Maximum particle diameter | μm | 1674.0 | 322.8 | 704.0 | 1826.0 | 2000.0 | 542.9 | 1535.0 |
| | d90 | μm | 552.7 | 124.7 | 282.8 | 712.3 | 648.6 | 149.5 | 711.2 |
| | d50 | μm | 160.0 | 30.5 | 83.4 | 203.1 | 240.3 | 31.2 | 246.7 |
| | d15 | μm | 30.3 | 11.0 | 13.8 | 38.7 | 46.7 | 14.1 | 60.1 |
| | Minimum particle diameter | μm | 1.3 | 1.1 | 1.3 | 3.3 | 2.1 | 1.8 | 1.8 |

EP 3 785 547 A1

56

(continued)

| | Unit | Test Example 21 | Test Example 22 | Test Example 23 | Test Example 24 | Test Example 25 | Test Example 26 | Test Example 27 |
|---|---|---|---|---|---|---|---|---|
| Cumulative frequency of 100 μm or more (A) | % | 77.3 | 11.0 | 46.0 | 62.3 | 73.3 | 15.8 | 62.6 |
| Cumulative frequency of 4 μm or less (B) | % | 1.1 | 5.0 | 5.6 | 1.2 | 1.9 | 4.2 | 1.9 |
| A/B | | 67.8 | 2.2 | 8.1 | 51.5 | 38.8 | 3.8 | 33.3 |
| d15/Minimum particle diameter | | 24.0 | 9.9 | 10.8 | 11.8 | 22.0 | 7.9 | 33.7 |
| Maximum particle diameter/d90 | | 3.0 | 2.6 | 2.5 | 2.6 | 3.1 | 3.6 | 2.2 |
| Modal diameter/minimum particle diameter | | 197.4 | 30.7 | 178.4 | 58.7 | 166.0 | 41.5 | 152.2 |
| Sensory test | Scattering | | 5 | 5 | 5 | 4 | 5 | 5 | 4 |
| | Firmness of dough | | 3 | 5 | 5 | 3 | 4 | 5 | 4 |
| | Texture of dough | | 5 | 4 | 5 | 5 | 5 | 5 | 5 |
| | Fragility during storage | | 5 | 3 | 5 | 5 | 5 | 4 | 5 |

[Table 19]

| | | Unit | Test Example 28 | Test Example 29 | Test Example 30 | Test Example 31 | Test Example 32 | Test Example 33 | Test Example 34 |
|---|---|---|---|---|---|---|---|---|---|
| Measurement value | Sugar content | % by mass | 57.6 | 57.3 | 32.3 | 39.8 | 29.0 | 43.0 | 18.4 |
| | Moisture content | % by mass | 9.2 | 19.5 | 2.6 | 2.3 | 10.0 | 10.0 | 5.0 |
| | Total fat/oil content | % by mass | 9.0 | 1.6 | 37.1 | 33.2 | 5.0 | 5.0 | 21.0 |
| | Content of insoluble dietary fibers | % by mass | 10.2 | 8.0 | 7.7 | 6.8 | 8.8 | 6.9 | 7.0 |
| Before ultrasonication | Modal diameter | μm | 352.0 | 592.0 | 271.4 | 296.0 | 228.2 | 40.4 | 456.5 |
| | Second modal diameter | μm | - | - | - | - | 62.2 | - | - |
| | Modal diameter/second modal diameter | | - | - | - | - | 3.7 | - | - |

(continued)

| | | Unit | Test Example 28 | Test Example 29 | Test Example 30 | Test Example 31 | Test Example 32 | Test Example 33 | Test Example 34 |
|---|---|---|---|---|---|---|---|---|---|
| After ultrasonication | Modal diameter | $\mu$m | 248.9 | 418.6 | 37.0 | 22.0 | 271.4 | 37.0 | 497.8 |
| | Maximum particle diameter | $\mu$m | 1291.0 | 2000.0 | 592.0 | 592.0 | 837.2 | 2000.0 | 1408.0 |
| | d90 | $\mu$m | 572.1 | 994.7 | 96.3 | 108.9 | 339.1 | 451.2 | 687.0 |
| | d50 | $\mu$m | 139.1 | 247.0 | 24.3 | 21.3 | 95.1 | 43.4 | 316.0 |
| | d15 | $\mu$m | 59.2 | 104.3 | 6.2 | 5.4 | 16.8 | 11.5 | 49.6 |
| | Minimum particle diameter | $\mu$m | 2.8 | 3.9 | 1.3 | 1.3 | 1.8 | 1.8 | 2.1 |
| | Cumulative frequency of 100 $\mu$m or more (A) | % | 47.1 | 76.3 | 10.0 | 11.0 | 49.3 | 29.7 | 79.0 |
| | Cumulative frequency of 4 $\mu$m or less (B) | % | 2.9 | 1.1 | 9.0 | 5.0 | 3.1 | 3.1 | 1.9 |
| | A/B | | 16.2 | 69.4 | 1.1 | 2.2 | 15.8 | 9.6 | 41.6 |
| | d15/Minimum particle diameter | | 21.5 | 26.8 | 4.9 | 4.3 | 9.4 | 6.5 | 23.4 |
| | Maximum particle diameter/d90 | | 2.3 | 2.0 | 6.2 | 5.4 | 2.5 | 4.4 | 2.0 |
| | Modal diameter/minimum particle diameter | | 90.5 | 107.6 | 29.3 | 17.4 | 152.2 | 20.8 | 234.7 |
| Sensory test | Scattering | | 5 | 4 | 4 | 4 | 5 | 5 | 5 |
| | Firmness of dough | | 5 | 3 | 5 | 4 | 5 | 5 | 4 |
| | Texture of dough | | 5 | 5 | 3 | 3 | 5 | 5 | 5 |
| | Fragility during storage | | 5 | 5 | 3 | 4 | 5 | 5 | 5 |

INDUSTRIAL APPLICABILITY

The solid food product composition containing insoluble dietary fibers of the present invention and a method of manufacturing the same can be conveniently and widely used in the field of food products and has a significantly high utility.

**Claims**

1.  A solid food product composition comprising insoluble dietary fibers, satisfying the following (1) to (7) :

    (1) the composition comprises edible part and/or non-edible part of one or more foodstuffs containing insoluble dietary fibers, wherein a content of the foodstuff is 5% by mass or more and 95% by mass or less in terms of total dry mass;
    (2) a content of insoluble dietary fibers is 1% by mass or more;
    (3) a sugar content is 10% by mass or more and 75% by mass or less;
    (4) a moisture content is 20% by mass or less;
    (5) 50% cumulative particle diameter after ultrasonication is more than 15 $\mu$m and 500 $\mu$m or less;
    (6) 90% cumulative particle diameter after ultrasonication is 50 $\mu$m or more and 1,000 $\mu$m or less;
    (7) a minimum particle diameter after ultrasonication is 4 $\mu$m or less.

2.  The food product composition according to claim 1, wherein a total fat/oil content is 30% by mass or less.

3.   The food product composition according to claim 1 or 2, wherein a maximum particle diameter after ultrasonication is 100 $\mu$m or more.

4.  The food product composition according to any one of claims 1 to 3, wherein the 50% cumulative particle diameter after ultrasonication is greater than 30 $\mu$m and 300 $\mu$m or less.

5.  The food product composition according to any one of claims 1 to 4, wherein 15% cumulative particle diameter after ultrasonication is less than 100 $\mu$m.

6.  The food product composition according to any one of claims 1 to 5, wherein % cumulative frequency of 100 $\mu$m or more after ultrasonication (A) is 5% or more.

7.  The food product composition according to any one of claims 1 to 6, wherein % cumulative frequency of 4 $\mu$m or less after ultrasonication (B) is 1% or more.

8.  The food product composition according to any one of claims 1 to 7 satisfying the following equation 1:

```
{(% cumulative frequency of 100 μm or more after
ultrasonication (A))/(% cumulative frequency of 4 μm or
less after ultrasonication (B))} ≥ 2.0 ... equation 1.
```

9.   The food product composition according to any one of claims 1 to 8 satisfying the following equation 2:

```
{(15% cumulative particle diameter after
ultrasonication)/(minimum particle diameter after
ultrasonication)} ≥ 4.0 ... equation 2.
```

10. The food product composition according to any one of claims 1 to 9 satisfying the following equation 3:

$$\{(\text{modal diameter after ultrasonication})/(\text{minimum particle diameter after ultrasonication})\} \geq 15.0 \text{ ... equation 3.}$$

11. The food product composition according to any one of claims 1 to 10, wherein particles before ultrasonication assume a multimodal particle diameter distribution.

12. The food product composition according to any one of claims 1 to 11 satisfying the following equation 4:

$$0.05 < \{(\text{modal diameter before ultrasonication})/(\text{second modal diameter before ultrasonication})\} < 10 \text{ ... equation 4.}$$

13. The food product composition according to any one of claims 1 to 12 comprising no egg and/or no milk.

14. The food product composition according to any one of claims 1 to 13, wherein the foodstuff containing insoluble dietary fibers is one or more selected from the group consisting of nuts/seeds, grains, pulses, vegetables, and fruits.

15. The food product composition according to claim 14, wherein the foodstuff containing insoluble dietary fibers is one or more selected from the group consisting of corn, green soybean, pea, carrot, pumpkin, cabbage, kale, sweet potato, paprika, beet, broccoli, spinach, onion, and tomato.

16. The food product composition according to any one of claims 1 to 15, wherein the foodstuff containing insoluble dietary fibers is a foodstuff having been subjected to drying.

17. The food product composition according to any one of claims 1 to 16, wherein a water activity value of the foodstuff containing insoluble dietary fibers is 0.95 or less.

18. The food product composition according to any one of claims 1 to 17, wherein the foodstuff containing insoluble dietary fibers comprises an edible part and the non-edible part.

19. The food product composition according to any one of claims 1 to 18, comprising an edible part and the non-edible part of the same type of foodstuff containing insoluble dietary fibers.

20. The food product composition according to claim 18 or 19, wherein non-edible part/(edible part + non-edible part) is 2% by mass or more.

21. The food product composition according to any one of claims 18 to 20, wherein the non-edible part of the foodstuff containing insoluble dietary fibers comprises one or more selected from the group consisting of core of corn; pod of green soybean; pod of pea; petiole base of carrot; pumpkin seed or pith; core of cabbage; petiole base of kale; both ends of sweet potato; seed or stem end of paprika; skin of beet; leaf and stem of broccoli; plant foot of spinach; protective leaf, bottom part, or head part of onion; and stem end of tomato.

22. The food according to any one of claims 1 to 21, further comprising cocoa bean or tea extract.

23. A food and drink comprising the food product composition according to any one of claims 1 to 22.

24. A liquid or solid seasoning comprising the food product composition according to any one of claims 1 to 22.

25. A method of manufacturing the food product composition according to any one of claims 1 to 22, comprising subjecting a foodstuff containing insoluble dietary fibers to a drying.

26. The method according to claim 25, further comprising blending a ground product of an edible part and/or a non-edible part of the foodstuff containing insoluble dietary fibers with a sugar.

27. A method of manufacturing food and drink, comprising incorporating the food product composition according to any one of claims 1 to 22.

28. A method of manufacturing a liquid or solid seasoning, comprising incorporating the food product composition according to any one of claims 1 to 22.

29. A method of imparting an effect of preventing scattering to a solid food product composition containing insoluble dietary fibers, comprising subjecting a foodstuff containing insoluble dietary fibers to drying and grinding to obtain the food product composition according to any one of claims 1 to 22.

30. The method according to claim 29, further comprising blending the foodstuff having been subjected to drying and grinding, with a sugar.

## INTERNATIONAL SEARCH REPORT

| | International application No. |
|---|---|
| | PCT/JP2019/031519 |

**A. CLASSIFICATION OF SUBJECT MATTER**
Int.Cl. A23L7/126(2016.01)i

According to International Patent Classification (IPC) or to both national classification and IPC

**B. FIELDS SEARCHED**

Minimum documentation searched (classification system followed by classification symbols)
Int.Cl. A23L7/00-7/25, A23G3/00-3/56, A21D13/00-13/80

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/MEDLINE/EMBASE/BIOSIS/FSTA/WPIDS (STN), JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-153398 A (KEWPIE CORPORATION) 07 September 2017 (examples 1, 4-8) (Family: none) | 1-17,22-30<br>18-21 |
| X<br>A | FERREIRA, M. S. et al., "Formulation and characterization of functional foods based on fruit and vegetable residue flour.", J. Food Sci. Technol., 2015, vol. 52, no. 2, pp. 822-830 (figures, tables "Biscuit formulations") | 1-17,22-30<br>18-21 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 October 2019 (30.10.2019) | 12 November 2019 (12.11.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

International application No.

PCT/JP2019/031519

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-284148 A (KUNIYASU, Haruko) 24 December 2010 (claims, examples) (Family: none) | 1-30 |
| P,X | 「ZENB initiative」の取り組みにおいてクラウドファンディングを開始し、試作品を提供！－植物をまるごとおいしくいただく新技術により開発された"技術の結晶"－, MIZKAN NEWSRELEASE R18029, 04 December 2018, pp. 1-2, non-official translation ("In countermeasure of 'ZENB initiative', starting crowdfunding and providing prototypes!, – 'The fruit of technology' developed by new technology to eat the whole plants deliciously") | 1-30 |

Form PCT/ISA/210 (continuation of second sheet) (January 2015)

## REFERENCES CITED IN THE DESCRIPTION

**Patent documents cited in the description**

- JP 2016067212 A
- JP 2001352927 A
- JP 2014087313 A
- JP 2014140364 A

**Non-patent literature cited in the description**

- The Food Labeling Standards. *Cabinet Office Ordinance,* 2015
- Analytical Manual for the Standard Tables of Food Composition in Japan. 2015
- Food Composition in Japan. 2015
- Standard Tables of Food Composition in Japan. 2015
- *The Food Labeling Standards (Cabinet Office Ordinance,* 2015
- The Food Labeling Standards (Cabinet Office Ordinance. 2015
- Table of food additive names for indication. Food Additives Indication Pocket Book. 2011
- Table of food additive names for indication'' of. Food Additives Indication Pocket Book. 2011